# EUROPEAN PATENT SPECIFICATION

(11) **EP 3 808 619 B1**
(45) Date of publication and mention of the grant of the patent: **09.08.2023**
(21) Application number: 19204039.2
(22) Date of filing: 18.10.2019
(51) Int. Cl.: B60T 17/22, B60T 8/32

(54) **AUTONOMOUSLY DRIVEN VEHICLE**
AUTONOM FAHRENDES FAHRZEUG
VÉHICULE À ENTRAÎNEMENT AUTONOME

(43) Date of publication of application: 21.04.2021
(73) Proprietor: Haldex Brake Products Aktiebolag, 261 24 Landskrona (SE)
(72) Inventor: NILSSON, Anders, 26124 Landskrona (SE)
(74) Representative: REHBERG HÜPPE + PARTNER

(56) References cited:
- CN-A- 107 709 108
- US-A1- 2017 158 183
- US-A1- 2018 001 879
- US-B2- 10 137 875

## Description

### TECHNICAL FIELD OF THE INVENTION

The present invention relates to an autonomously driven vehicle which is any vehicle, in particular a commercial vehicle, an utility vehicle or an agricultural vehicle and which is at least temporarily operated only by an autonomous driving control system without the interaction of the driver. It is in particular possible that the driver monitors the driving of the vehicle when under control of the autonomous driving control system and that the driver interacts with the control of the vehicle or takes over the control of the vehicle e.g. when detecting an undesired driving behavior or an upcoming emergency situation. However, within the frame of the present invention the vehicle can also be driven autonomously with reduced or without options for an interaction by the driver.

### PRIOR ART

US 10,137,875 B2 discloses a foot brake module which controls a backup brake pressure transmitted to a pressure regulating module. The backup brake pressure is controlled by an inlet/outlet valve of the foot brake module. The inlet/outlet valve can on the one hand be mechanically controlled by the driver by actuating the foot brake pedal. On the other hand it is possible to actuate the inlet/outlet valve via a pneumatic control piston which is biased by a control pressure. The control pressure is controlled by a solenoid valve device which is electronically controlled by a control unit of the foot brake module. Also a combined operation of the foot brake module is possible wherein the inlet/outlet valve is both actuated by the mechanical driver's braking request and in response to a request by the control unit of the foot brake module via the solenoid valve device. The foot brake module comprises two sensors which in a redundant way sense the movement of the foot brake pedal.

The pressure regulating module includes a backup solenoid valve which when energized shuts off the pressure controlled by the foot brake module and when not energized connects the outlet port of the foot brake module to the service brake cylinders. Furthermore, the pressure regulating module contains an inlet/outlet solenoid valve combination connected on the output side to a relay valve for allowing an electronic control of the brake pressure in the service brake cylinders.

The brake system of US 10,137,875 B2 allows an operation of the service brake cylinders in different ways:
- During the normal operation a brake demand of the driver input via the foot brake pedal is sensed by the sensors of the foot brake module. The signals of the sensors are conditioned and made databus-compatible by the control unit of the foot brake module and then transmitted via a databus to an electronic service brake control unit. The electronic service brake control unit electronically controls the pressure regulating module, here the inlet/outlet valve combination controlling the relay valve for the electronic-pneumatic control of the brake pressure in the service brake cylinders. During this normal operation the backup brake pressure controlled by the foot brake module is shut off by the energized backup solenoid valve. On the basis of pressure sensors integrated into the pressure regulating modules it is possible to perform a feedback control of the brake pressure.
- In the case of a fault or defect in the superordinate electronic service brake pressure control (a fault in the energy source, a fault in the electronic service brake control device or of a control unit in the pressure regulating modules) the backup solenoid valve switches into the non-energized state so that the brake pressure in the service brake cylinders is mechanically-pneumatically controlled by the foot brake module.
- Furthermore, in the case of a fault or failure of the superordinate electronic service brake pressure control for a present braking request the control unit of the foot brake module is able to control the solenoid valve device for biasing the control piston of the foot brake module for electronically-pneumatically controlling the inlet/outlet valve of the foot brake module.
- The braking request can also originate from an autopilot device or from an adaptive cruise control system.
- ABS control valves are integrated into the pressure regulating modules which in a known fashion perform a slip control.

The brake system of US 10,137,875 B2 discloses the use of a two-channel pressure regulating module assigned to the service brake cylinders of the rear axle of the vehicle. A one-channel pressure regulating module with integrated ABS valves is assigned to the service brake cylinders of the front axle. The ABS valves are controlled by the electronic service brake control device. US 10, 137, 875 B2 furthermore discloses the cooperation between the brake system and a steering system. Here, the brake system serves as a redundancy in the case of a failure of the steering system using a steering by braking. The failure of the electric service brake circuit is detected by a self-monitoring by the electronic service brake control device or by the control unit of the foot brake module or by an external monitoring by an electronic control device of a third system.

### OBJECT OF THE INVENTION

It is the object of the present invention to provide an autonomously driven vehicle comprising a brake system
- leading to an increased brake performance and/or
- leading to an increased security and/or
- providing a fail-safe operation.

### SOLUTION

According to the present invention, the object of the invention is solved by the features of the independent claims. Additional preferred embodiments according to the invention are to be seen in the dependent claims.

### DESCRIPTION OF THE INVENTION

The inventive autonomously driven vehicle comprises a brake system with an EBS brake system and an auxiliary brake system. The EBS brake system and the auxiliary brake system provide redundant options for causing a brake action. Due to the redundancy the security of the brake system is increased.

Furthermore, the autonomously driven vehicle comprises an autonomous driving control system with control logic which is able to control autonomous driving as well as for automatically inducing a brake action of the brake system.

The brake system also comprises a switching device and/or switching logic. By means of the switching device or switching logic it is possible to deactivate the EBS brake system and to activate the auxiliary brake system. This switching from the EBS brake system to the auxiliary brake system takes place when the switching device or the switching logic detects that the EBS brake system has a reduced brake performance or completely fails.

The autonomous driving control system creates a brake demand at its output which is independent on the brake system which is presently activated and which is independent on the brake performance of the brake systems. For this embodiment it is even possible that the autonomous driving control system is not aware of the present brake performance of the brake systems and/or not aware which brake system (so the EBS brake system or the auxiliary brake system) is presently activated. For the inventive solution any measures required for considering any reduced brake performances of one of the brake systems and/or for considering the switch from the EBS brake system to the auxiliary brake system are taken outside from the autonomous driving control system in the brake system. The invention allows a simplification of the design and control logic of the autonomous driving control system. In particular, it is possible to design and manufacture an autonomous driving control system that creates a brake demand which is independent on the special type and configuration of the vehicle, of the design and components of the used brake system and the like. Furthermore, it is possible that the responsibilities are divided such that a first company (e.g. the company engineering and supplying the vehicle or a first supplier supplying the autonomous driving control system) is responsible for designing the autonomous driving control system such that it fulfills the requirements for the general autonomous driving control functions. A second company (e.g. a supplier of the brake system and/or of components of the brake system) is responsible for creating the required brake forces by the brake systems according to the brake demand received from the autonomous driving control system. Here, the brake system is designed to fulfil the usual functions required for braking, in particular the provision of an emergency brake function upon an emergency brake request, a slip control during braking, a slip control by a brake action at specific wheel ends when accelerating the vehicle, a drag torque control, a yaw torque control and/or a tilting torque control, a parking brake function and the like.

One embodiment of the invention relates to a brake system wherein it is possible to operate the EBS brake system in two different modes, namely in an electropneumatic EBS braking mode and a pneumatic EBS backup mode. The pneumatic EBS backup mode is in particular used as a fallback solution for creating a brake force upon a depression of the brake pedal by the driver. The pneumatic EBS backup mode mechanically-pneumatically transforms the depression of the brake pedal into the brake pressure biasing the brake actuator without electronic interaction. Instead, in the electropneumatic EBS braking mode there is the common electronic-pneumatic EBS brake control.

The auxiliary brake system can be operated in an electropneumatic auxiliary braking mode. Here, in the electropneumatic auxiliary braking mode the brake performance might be the same as in the electropneumatic EBS braking mode or the brake performance might be reduced or the electropneumatic auxiliary braking mode might have a reduced functionality. Accordingly, for this embodiment of the invention the brake system can be operated in three different modes, namely
- the electropneumatic EBS braking mode,
- the pneumatic EBS backup mode and
- the electropneumatic auxiliary braking mode
such that a "doubled" redundancy is provided which increases the safety of driving. The switching of the operation of the brake system between the EBS braking mode, the EBS backup mode and the auxiliary braking mode is provided by a switching device and/or an analyzing device in the brake system.

Generally, in the auxiliary brake system any components and valves allowing an electropneumatic control of the brake pressure can be used. For a particular proposal of the invention the auxiliary brake system comprises a pivoting anchor valve. The pivoting anchor valve (directly or as a pilot valve) controls a brake pressure in at least on brake actuator.

A "pivoting anchor valve" in the sense of the present invention in particular is a valve which fulfills one of the following conditions, a plurality or any number of the following conditions or all of the following conditions:
- The pivoting anchor valve comprises a pivoting anchor which forms the valve body or is coupled to the valve body, the valve body moving relatively to a valve seat between a closed position and at least one open position. The pivoting anchor can be pivoted by an electro-magnetic actuation into different pivoting positions which correlate with different valve positions (at least two valve positions). Alternatively or cumulatively, it is possible that by the electro-magnetic actuation the pivoting anchor and/or the valve body can be held in at least one of the different valve positions. It is possible that the pivoting anchor is biased with a bending moment due to the electro-magnetic actuation. The pivoting anchor or a holding device of the same comprises a flexible element or flexible section being flexible with respect to a bending by the bending moment applied by the electromagnet. A changed pivoting position or operating position of the pivoting anchor valve correlates with a changed bending of the pivoting anchor or the holding device achieved by the electro-magnetic actuation. With respect to possible exemplary embodiments of a pivoting anchor valve of this type comprising a flexible bending element reference is e.g. made to the patent publications EP 2 756 215 B1, EP 2 049 373 B1, EP 2 567 131 B1 and EP 1 303 719 B1 and the patent applications with the application numbers GB 1 719 309.5, GB 1 904 957.6, GB 1 820 137.6, GB 1 806 527.6, GB 1 719 415.0 and GB 1 719 344.2. The disclosure of these patent publications and patent applications can be combined with the disclosure of the present patent application, in particular with respect to
   - design options for a pivoting anchor valve and/or
   - the provision of a different number of stable and/or unstable valve positions and/or
   - the design of the flexible element being bent by the bending moment and/or
   - the integration of the flexible element into the pivoting anchor or its linkage thereto and/or
   - the use and arrangement of permanent magnets for providing stable valve positions and/or
   - the design of at least one electromagnet applying the bending moment for pivoting the pivoting anchor and/or
   - the control of the pivoting anchor valve.

However, it is also possible that the pivoting anchor valve comprises a pivoting anchor which is supported for being pivoted by a bearing. The pivoting anchor can be pivoted by electromagnets into different operating positions or held in the same. The different operating positions correlate with different valve positions of the pivoting anchor valve.

With respect to embodiments of this type, exemplary reference is made to the publications WO 2016/062542 A1 and EP 3 222 897 A1. The disclosure of these publications is considered as prior art of the present patent application, in particular with respect to the design of the pivoting anchor valve, the provided valve positions and/or the control and the electro-magnetic actuation of the pivoting anchor valve.
- An inventive pivoting anchor valve might also be denoted as "fast acting brake valve" (abbreviated "FABV"). An FABV allows a fast actuation with a fast change of the operating position wherein a change of the operating position might e.g. be achieved within a time span of less than 25 ms, less than 20 ms, less than 10 ms, less than 7 ms, less than 5 ms, less than 3 ms, less than 2 ms or even less than 1 ms.
- By use of an inventive pivoting anchor valve in an open position a large flow rate and/or a large valve cross-section or transitional cross-section can be provided.

Preferably, the transitional cross-section of the pivoting anchor valve in an open position at least equals the inner cross-section of the supply tube connected to the supply port of the pivoting anchor valve. Accordingly, if the supply tube has an inner cross-section with a diameter of 5 mm, the transitional cross-section of the pivoting anchor valve in the open position is at least 0.2 cm².

Preferably, in an open position the transitional cross-section or valve cross-section is at least 0.3 cm², at least 0.4 cm², at least 0.5 cm², at least 0.6 cm² or even at least 0.8 cm².
- Due to the pivoting of the pivot anchor the valve body closing the valve seat is pivoted between the closed position and the open position. Accordingly, the transitional cross-section in the open position corresponds to the outer circumference of a cylinder cut in two non-parallel planes wherein these planes form an angle that corresponds to the pivot angle of the pivot anchor between the open position and the closed position. In particular the pivot angle and the angle between these planes is in the range of 1° to 5° or 2° to 4°.
- The (averaged) movement of the valve body formed by the pivoting anchor or connected thereto between one valve position and the adjacent valve position is in the range of 0.5 to 5 mm, in particular 1.0 to 4 mm.
- When controlling a pivoting anchor valve of this type, there might be only a short delay due to the inertial mass of the moved valve elements, in particular a delay or dead time being smaller than 4 ms, smaller than 2 ms or even less than 1 ms.
- It is possible that the pivoting anchor valve comprises more than one stable operating position. The pivoting anchor valve might e.g. be bi-stable or multi-stable. This might e.g. be provided in the way that in two or more operating positions the pivoting anchor or a component connected therewith contacts a permanent magnet (cp. the patent publications EP 2 756 215 B1, EP 2 049 373 B1, EP 2 567 131 B1 and EP 1 303 719 B1 and the patent applications with the application numbers GB 1 719 309.5, GB 1 904 957.6, GB 1 820 137.6, GB 1 806 527.6, GB 1 719 415.0 and GB 1 719 344.2). However, it is also possible that bi-stable operating positions are provided by a mechanical spring element which e.g. biases the pivoting anchor or a valve element connected therewith from an unstable middle equilibrium position in both directions towards stable operating positions as disclosed in the publications WO 2016/062542 A1 or EP 3 222 897 A1. Furthermore, it is possible that a stable position is provided by the bending stiffness of the flexible element or pivoting anchor.
- The pivoting anchor valve might be an electrically controlled pneumatic valve without pneumatic pilot having a single stable state, two or more stable states when not being electrically energized.
- For the pivoting anchor valve the pneumatic control bandwidth is primarily determined by the mechatronic design and actuator size or control volume

Within the frame of the invention, the pivoting anchor valve might be embodied as a 2/2-way valve, 3/2-way valve, 3/3-way valve or any other valve. It is also possible that a plurality of redundant pivoting anchor valves are arranged in one constructional unit and/or a combination of a plurality of pivoting anchor valves that are arranged in pneumatic parallel connection or in series connection are arranged in a constructional unit (e.g. a combination of a 3/2-way valve and a 2/2-way valve; e.g. a connection of a pressurized inlet line to the outlet for the service brake cylinder via a first 2/2-way valve as well as a connection of a de-aerating port to the outlet for the service brake cylinder via a second 2/2-way valve). It is possible that a pivoting anchor valve which is pivoted into different operating positions due to the bending of the pivoting anchor or an associated holding element is partially transferred from one operating position of the pivoting anchor valve into another operating position of the pivoting anchor valve by energy which is stored by the bending of the pivoting anchor or the associated holding element. In this way, then for achieving the desired operating positions by means of at least one electromagnet only the required additional energy for arriving at the other operating position has to be provided.

According to the invention, the EBS brake system and the auxiliary brake system are connected to the brake actuator (s) via parallel brake paths. For one proposal of the invention the auxiliary brake system and the EBS brake system are connected to at least one brake actuator via a shuttle valve. Here, any shuttle valve having
- one inlet connected to the EBS brake path,
- another inlet connected to the auxiliary brake path and
- an outlet connected to the at least one brake actuator
can be used unless it allows the alternating connection of the brake actuators to the different brake systems and the related paths. Preferably, the shuttle valve is embodied as a double check valve or flip-over valve which connects the inlet with the higher pressure to the outlet.

In the case that in the present context the EBS system and the auxiliary brake system are mentioned, these systems can be responsible for one single brake actuator of a specific wheel or for a group of brake actuators of any number of wheels (in particular brake actuators of wheels of one axle or a plurality of axles, brake actuators of a specific brake actuator circuit or for brake actuators of a specific vehicle side, to mention only some examples). In these cases, the EBS brake system and the auxiliary brake system might comprise different brake system parts being each related to the associated brake actuator of the single wheel or the associated group of wheels. In this case, a common electronic control unit or a plurality of communicating control units can be responsible for controlling the different brake system parts of the EBS brake system and/or of the auxiliary brake system.

For one embodiment of the invention a first EBS brake system part and first auxiliary brake system part are connected to at least on brake actuator of a first axle (e.g. a front axle). Furthermore, a second EBS brake system part and a second auxiliary brake system part and a second auxiliary brake system part are connected to at least one brake actuator of a second axle (for the example a rear axle). In this way, independent redundancy can be provided for the different axles.

Generally, it is possible that both the first EBS brake system part and the first auxiliary brake system part are supplied with compressed air by the same reservoir and the second EBS brake system part and the second auxiliary brake system part are supplied with compressed air by this reservoir or by another separate reservoir.

For another embodiment of the invention a kind of "transverse supply" is suggested: a first reservoir supplies compressed air to the first EBS brake system part and the second auxiliary brake system part whereas a second reservoir supplies compressed air to the second EBS brake system part and the first auxiliary brake system part. For this embodiment it is e.g. possible that in the case of a leakage of one of the reservoirs the other reservoir is used for supplying compressed air to the associated EBS brake system part of one axle and to the associated auxiliary brake system part of the other axle so that despite of the leakage of one reservoir the braking of both axles is still possible.

Within the frame of the invention there can be a switch for all of the brake system parts from the activation of the EBS brake system parts to activation of the auxiliary brake system parts in the case that the switching device and/or the analyzing device detects that there is a reduced performance or a failure in one of the EBS brake system parts. Accordingly, after the switch the brake actuators of all of the wheels are then controlled by auxiliary brake system parts.

However, another embodiment of the invention suggests that the switching device and/or the analyzing device comprises control logic which determines if the at least reduced brake performance occurs in the first EBS brake system part or in the second EBS brake system part. Depended on the result of this determination the control logic takes differing measures as follows:
a) In the case that there is only an at least reduced brake performance of the first EBS brake system part the control unit deactivates the first EBS brake system part and activates the first auxiliary brake system part whereas the second EBS brake system part remains activated.
b) Instead, if there is only an at least reduced brake performance of the second EBS brake system part, the control logic deactivates the second EBS brake system part and activates the second auxiliary brake system part whereas the first EBS brake system part remains activated.

This embodiment is in particular advantageous in the case that in the auxiliary braking mode there is a reduced functionality or performance. In this case the increased functionality or brake performance can be upheld at the axle for which the EBS brake system part is still working as desired.

As mentioned in the beginning there might be a "doubled" redundancy" in the case that the EBS brake system comprises an EBS backup mode. There might be a variety of conditions for using or activating the EBS backup mode. For one particular embodiment the pneumatic EBS backup mode is activated in the case that both a brake demand of the driver is present and the EBS brake system has an at least reduced performance. Here, the EBS backup mode cannot be activated or used for a brake demand issued by the autonomous vehicle driving system.

The invention also suggests that the vehicle comprises a status determining device or status determining logic which determines and/or signals that the auxiliary brake system is (or will be) activated. The determined status can e.g. be signaled to a signaling device being accessible for the driver, e.g. a display, a warning light or a speaker in the cabin of a tractor so that it is possible to bring to the attention of the driver that the EBS braking mode has been left and the operation has been switched to the auxiliary braking mode. It is also possible that a signal is given to the driver which indicates at which axle the failure of the EBS brake system part has occurred. It is furthermore possible that the status determined is also signaled (e.g. via any wired or wireless communication line or network or bus system) to the other components or electronic control units.

Generally, the switching device and/or the analyzing device might be separate devices or might comprise separate electronic control units. For one proposal of the invention the switching device is part of an EBS control unit which activates the auxiliary brake system in an auxiliary brake mode. This embodiment leads to a compact design with a multifunctional EBS control unit.

It is possible that a slip control of a brake actuator during deceleration both by the EBS brake system as well as by the auxiliary brake system relies on one and the same wheel speed sensor of the wheel associated with the brake actuator. In this case the wheel speed signal from this wheel speed sensor can be transmitted via separate lines to the EBS brake system and the auxiliary brake system or forwarded by one brake system to the other brake system. However, in the case that there is a failure of the sensor there is no slip control possible for both brake systems. For one embodiment of the invention, the invention suggests to use a first wheel speed sensor and a second wheel speed sensor, the two sensors being associated with one and the same vehicle wheel. A wheel speed signal from the first wheel speed sensor is then processed by the EBS brake system whereas a wheel speed signal from the second wheel speed sensor is processed by the auxiliary brake system. Accordingly, a redundant slip control is provided on the basis of the redundant wheel speed sensors.

The invention also suggests to use not only one and the same brake pedal sensor or pair of brake pedal sensors for transferring an electric brake demand of the driver to the EBS brake system and the auxiliary brake system. For one embodiment the invention proposes that a first brake pedal sensor and a second brake pedal sensor are associated with a brake pedal unit. In this case, a brake pedal signal from the first brake pedal sensor is processed by the EBS brake system and a brake pedal signal from the second brake pedal sensor is processed by the auxiliary brake system. Accordingly, in the case of a failure of one of the brake pedal sensors by a switch from one brake system to the other it is still possible to create a brake action upon the brake demand given by the driver via the brake pedal. Also here, any communications (CAN, wired lines or wireless communications) are possible between the brake pedal sensors and the brake system.

For also excluding that a failure of a communication line leads to the result that a brake demand given by the driver cannot be considered there can be separate communication lines between the first brake pedal sensor and the EBS brake system on the one hand and the second brake pedal sensor and the auxiliary brake system on the other hand.

For another embodiment of an inventive vehicle the brake system (in particular the EBS brake system) comprises an interface. The interface is connected to an analyzing device for transmitting a take-over request and/or for receiving a take-over confirmation. The analyzing device comprises control logic for processing the take-over request and for determining if the take-over request can be confirmed or not. The analysis is performed on the basis of operating parameters, environmental parameters and the like. In the case that the analysis of the analyzing device leads to the result that the take-over request can be confirmed, the analyzing device creates and sends a take-over confirmation to the brake system via the interface. In the brake system the take-over confirmation triggers the deactivation of the EBS brake system and the activation of the auxiliary brake system.

For this embodiment, it is in particular possible that also the decision to deactivate the EBS brake system and to activate the auxiliary brake system can be made by use of a kind of double check:

In a first step the switching device requests a change from the EBS braking mode to the auxiliary braking mode. However, this change is not automatically and in any case executed. Instead, an additional control is performed by the analyzing device. Only upon confirmation of the take-over request by the analyzing device the change from the EBS braking mode to the auxiliary braking is actually executed.

In some cases it is possible that a split responsibility is installed for these two controlling steps: It is possible that the switching device and the criteria for switching from the EBS braking mode to the auxiliary braking mode are in the responsibility of the manufacturer of the brake system. Instead, the analyzing device and/or the criteria for confirming the take-over request can be in the responsibility of another company as e.g. the manufacture of the vehicle itself.

There are a lot of different possible conditions and criteria considered by the switching device for switching from the EBS braking mode to the auxiliary braking mode and/or considered by the analyzing device for confirming the take-over request. It is e.g. possible that thresholds are defined and/or that conditions or parameters for switching or confirming are compared to conditions of parameters stored in a table or storage unit. For one embodiment of the invention the switching or confirmation bases on vehicle driving conditions, environmental parameters, driver inputs, a brake performance of the EBS brake system and/or a brake performance of the auxiliary brake system.

In the inventive vehicle a status determining device or status determining control logic can be used which determines the status of the auxiliary brake system ("activated" or "deactivated"; operational mode of the auxiliary brake system; brake performance of the auxiliary brake system; functionality of the auxiliary brake system reduced/not reduced) and/or sends these status to other components. Here, these status can be sent with different frequencies, in particular dependent on the component or receiving unit and also the format of the status or the information included might differ from different components or receiving units.

Advantageous developments of the invention result from the claims, the description and the drawings.

The advantages of features and of combinations of a plurality of features mentioned at the beginning of the description only serve as examples and may be used alternatively or cumulatively without the necessity of embodiments according to the invention having to obtain these advantages.

The following applies with respect to the disclosure - not the scope of protection - of the original application and the patent: Further features may be taken from the drawings, in particular from the illustrated designs and the dimensions of a plurality of components with respect to one another as well as from their relative arrangement and their operative connection. The combination of features of different embodiments of the invention or of features of different claims independent of the chosen references of the claims is also possible, and it is motivated herewith. This also relates to features which are illustrated in separate drawings, or which are mentioned when describing them. These features may also be combined with features of different claims. Furthermore, it is possible that further embodiments of the invention do not have the features mentioned in the claims which, however, does not apply to the independent claims of the granted patent.

The number of the features mentioned in the claims and in the description is to be understood to cover this exact number and a greater number than the mentioned number without having to explicitly use the adverb "at least". For example, if an EBS brake system part is mentioned, this is to be understood such that there is exactly EBS brake system part or there are two EBS brake system parts or more EBS brake system parts. Additional features may be added to these features, or these features may be the only features of the respective product.

The reference signs contained in the claims are not limiting the extent of the matter protected by the claims. Their sole function is to make the claims easier to understand.

### BRIEF DESCRIPTION OF THE DRAWINGS

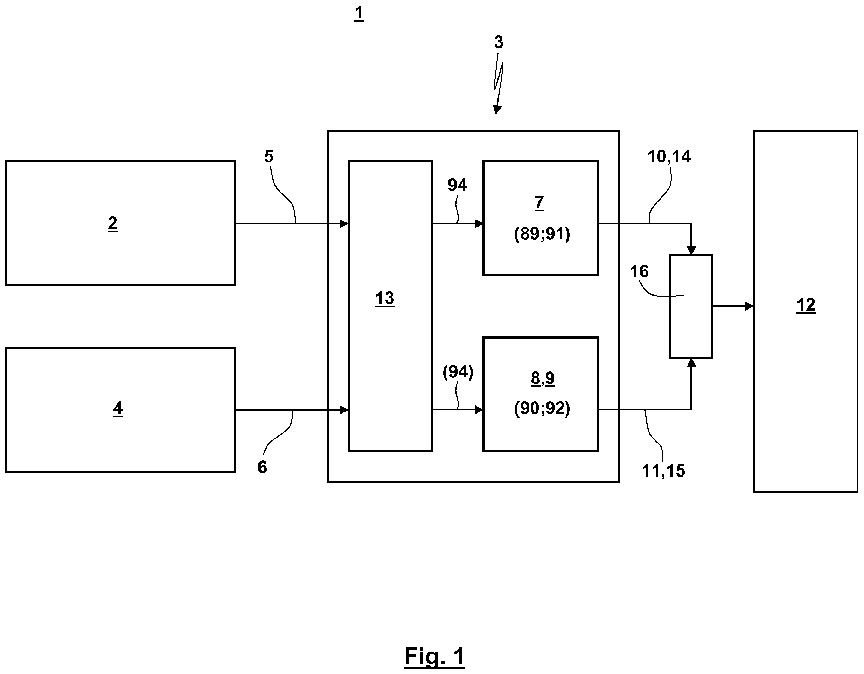

**Figs. 1 to 11** schematically show vehicles comprising a brake system with an EBS brake system and an auxiliary brake system.

### DESCRIPTION OF THE DRAWINGS

**Fig. 1** schematically illustrates a vehicle 1 comprising an autonomous vehicle driving control system 2. The autonomous vehicle driving system 2 is designed and configured for at least temporarily allowing an autonomous driving of the vehicle 1 without interaction of the driver. For that purpose the autonomous vehicle driving system 2 in particular controls the engine, the suspension, the steering units, the transmission system and/or the brake system 3 of the vehicle 1.

Furthermore, the vehicle 1 comprises a driver control system 4 allowing the driver to control the vehicle 1 alternatively or additional to the autonomous vehicle driving system 2 or to override the control of the vehicle 1 by the autonomous vehicle driving system 2. The driver control system 4 might be embodied as a brake pedal and/or a parking brake actuator.

In the vehicle 1 the control actions of the autonomous vehicle driving system 2 are prioritized over the control actions of the driver control system 4. In particular, by the driver control system 4 it is only possible to increase a brake force controlled by the autonomous vehicle driving system 2 whereas it is not possible to reduce the brake force controlled by the autonomous vehicle driving system 2.

The autonomous vehicle driving system 2 and the driver control system 4 generate brake demands 5, 6. The brake demand 5 of the autonomous vehicle driving system 2 is generated automatically by at least one control unit in particular on the basis of vehicle driving conditions, environmental parameters, driver inputs, a brake performance and the like. The brake demand 6 is generated by the driver of the vehicle 1, in particular by depressing a brake pedal. The brake demands 5, 6 are in particular transferred to the brake system 3 as electronic signals.

In the brake system 3 there are two redundant brake systems, namely in EBS brake system 7 and in auxiliary brake system 8 which in particular comprises a pivoting anchor valve 9. The EBS brake system 7 and the auxiliary brake system 8 generate brake pressures 10, 11 transmitted to a pneumatic brake actuator 12.

The brake system 3 comprises a switching device 13. By means of the switching device 13 it is possible to selectively activate one of the brake systems 7, 8 and deactivate the other of the brake systems 7, 8 so that only one of the brake systems 7, 8 is activated at a time. The switching device 13 switches between the brake systems 7, 8 dependent on the operating states and the performance of the brake systems 7, 8.

The brake pressures 10, 11 generated by the EBS brake system 7 and the auxiliary brake system 8 are transferred from the brake systems 7, 8 via brake pressure lines 14, 15 to associated inlets of a shuttle valve 16. The outlet of the shuttle valve 16 is connected to the brake actuator 12.

The brake demand 5 of the autonomous vehicle driving system 2 is independent on the switching state of the switching device 13 so that the brake demand 5 does not consider if at present the EBS brake system 7 or the auxiliary brake system 8 is activated. The brake system 3 is designed such that by the brake system 3 the required brake force of the brake actuator 12 will be generated upon the brake demand 6 of the autonomous vehicle driving system 2 independent from the brake system 7, 8 which is actually activated. Accordingly, the brake system 3 and the EBS brake system 7 and the auxiliary brake system 8 (and possibly further components) are designed such that they are able to generate the required brake forces upon the brake demand 5. This might mean that the autonomous vehicle driving system 2 can be engineered and manufactured independent on the specific design of the brake system 3 and the EBS brake system 7 and the auxiliary brake system 8 and possibly also on the used brake actuator 12. It is also possible that the autonomous vehicle driving system 2 is engineered and manufactured independent on the type of vehicle 1 used, the number of axles of the vehicle 1, the admissible load of the vehicle 1 and the like. In this case, the specifics of the different vehicles are considered in the brake system 3 instead of the autonomous vehicle driving system 2.

The switching device 13 comprises control logic for providing an internal diagnostic function for switching between the EBS braking mode 18 and the auxiliary braking mode 19. To mention only some non-limiting examples the switching device 13 might switch from the EBS braking mode 18 to the auxiliary braking mode 19 in the case that it is detected that a valve of the EBS brake system 7 does not work properly, a pilot valve is broken or a solenoid valve has a failure (which might e.g. be detected upon a monitoring of the energizing signal of the solenoid valve). Another criterion for switching from the EBS braking mode 18 to the auxiliary braking mode 19 might be a sensor failure of the EBS brake system 7, e.g. a failure of the pressure senor sensing the brake pressure 10.

The level of automation of the autonomous vehicle driving system 2 might e.g. a "conditional automation" wherein the driver is a necessity but it is not required for the driver to monitor the environment. Further, the driver must be ready to take control of the vehicle at all times with notice.

For another option the level of the automation is "high automation" wherein the vehicle is capable of performing all driving functions under certain conditions. Here, the driver may have the option to control the vehicle.

As another variant also a "full automation" is possible wherein the vehicle is capable of performing all driving functions under all conditions. Also here, the driver may or may not have the option to control the vehicle.

The autonomous vehicle driving system 2 might comprise the following components for providing the required functionality:
- radar sensors that monitor the position of other vehicles and the environment and in particular for allowing a cruise control and the avoidance of a collision with other vehicles, a pedestrians or any obstacle;
- video cameras for detecting traffic lights, for reading road signs, for keeping track of the position of other vehicles, for keeping track of the road and for looking out for the pedestrians and obstacles on the road;
- LIDAR system (light detection and ranging) comprising sensors that bounce pulses of light of the surroundings which are analyzed to identify lane markings and the edges of roads;
- a global positioning system (GPS) communicating with satellites and combined with readings from tachometers, altimeters and gyroscopes to provide more accurate positioning than possible with GPS alone;
- ultrasonic sensors to measure the position of objects very close to the vehicle, such as corbs and other vehicles when parking;
- a central computer or computer network processing the information provided by the sensors and operating parameters of the vehicle and creating the outputs for manipulating the steering, the accelerator and the brakes wherein the central computer comprises control logic for considering the rules of the road (both formal and informal);
- dedicated short-range communications-based receivers and communications devices permitting vehicle to communicate with other vehicles using DSRC with a wireless communication standard that enables reliable data transmission and active safety applications.

The brake demand 6 created by the driver should be flexible free configurable and should be limited to a certain interval of the deceleration as e.g. from 0.0 m/s² to 10.0 m/s². On the other hand, the jerk (in terms of gradient of deceleration) shall be limited to a certain maximum value.

The switching device 13 preferably activates the auxiliary braking mode 19 if the monitoring function determines that in the EBS braking mode 18 the EBS brake system 7 is not able to provide the brake force correlating with the brake demands 5, 6 respectively the brake demand 20.

For the embodiment shown in Fig. 1 the brake demands 5, 6 are directly transmitted to the switching device 13.

In the case that the switching device activates the EBS braking mode, the switching device 13 transmits a preferably electric brake demand 94 to the EBS brake system 7 which is then used for generating the brake pressure 10. Instead, no brake demand 94 is transmitted to the auxiliary brake system 8.

Instead, in the case that the switching device 13 is in the auxiliary braking mode the switching device 13 biases the auxiliary brake system 8 with the (preferably electric) brake demand 94 whereas the EBS brake system 7 is not biased by a brake demand 94.

The brake demand 94 might be or correlate with the brake demand 5 or the brake demand 6 might be calculated by the switching device 13 by consideration of both brake demands 5, 6.

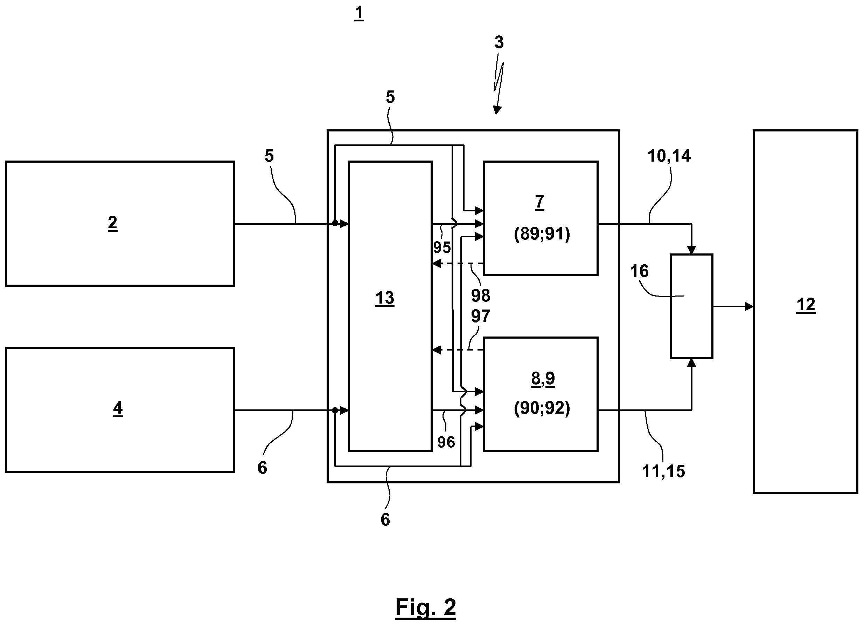

For the modified embodiment of **Fig. 2** the switching device 13 only sends activation/deactivation signals 95, 96 to the EBS brake system 7 and the auxiliary brake system 8. In the case that the switching device 13 decides that the EBS braking mode 18 should be activated, the switching device 13 sends an activation signal 95 to the EBS brake system 7 and sends a deactivation signal 96 to the auxiliary brake system 8. Instead, for activating the auxiliary braking mode 19, the switching device 13 sends a deactivation signal 95 to the EBS brake system 7 and sends an activation signal 96 to the auxiliary brake system 8. Also here, the switching device 13 determines the activation/deactivation signal 95, 96 on the basis of the brake demands 5, 6 and possibly other operating states or driver demands. For the embodiment of Fig. 2 the brake demands 5, 6 are directly transmitted to the EBS brake system 7 and the auxiliary brake system 8.

It is possible that the auxiliary brake system 8 monitors the function of the EBS brake system 7 (and/or vice versa). Despite of the fact that the brake pressure for the brake actuator 12 is controlled by the EBS brake system 7 the brake demands 5, 6 (as well as other operational states, driver demands, signals from the bus system, wheel speed signals and the like) are also available at the auxiliary brake system 8. Accordingly, the auxiliary brake system 8 is able to analyze if the brake action controlled by the EBS brake system 7 correlates with or corresponds to the brake demands 5, 6. In the case that the brake action or braking behavior controlled by the EBS brake system 7 is not sufficient or the auxiliary brake system 8 detects that the change of the wheel speed differs from the required change, the auxiliary brake system 8 is able to detect that the EBS brake system 7 does not work properly. In this case the auxiliary brake system 8 might also send a take-over request 97 to the switching device 13 such that the auxiliary braking mode 19 is activated by the switching device 13. In a corresponding way the EBS brake system 7 is able to monitor the brake control by the auxiliary brake system 8 and to create a take-over request 98.

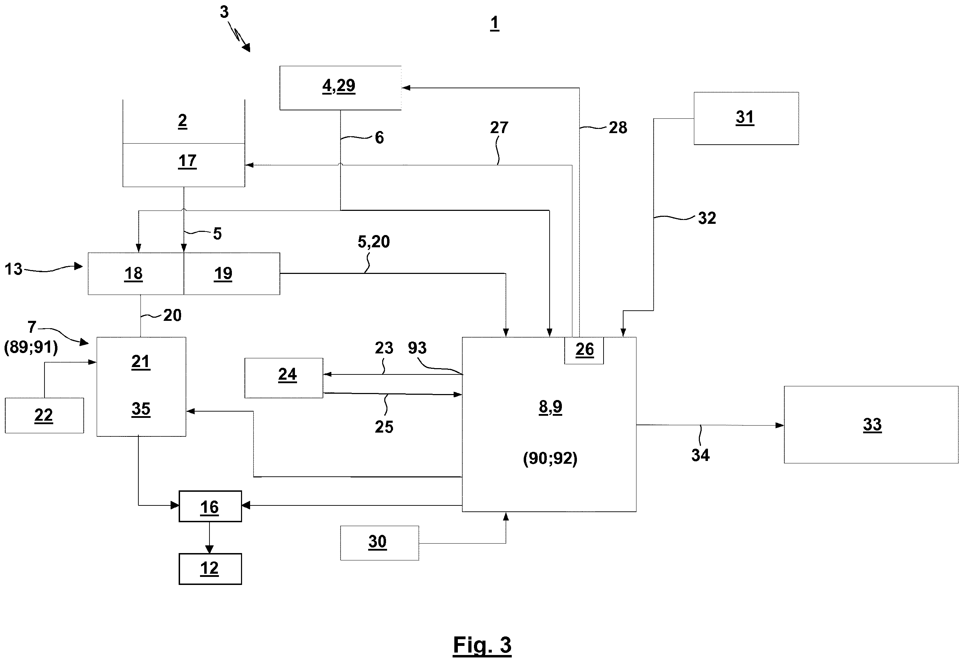

**Fig. 3** shows the relevant components of the vehicle 1 and their cooperation in greater detail. Here, the autonomous vehicle driving system 2 comprises a submodule or subroutine 17 which is responsible for creating the brake demand 5.

The brake demand 6 created by the driver control system 4 is transferred both directly to the switching device 13 and directly to the auxiliary brake system 8. Also the brake demand 5 created by the autonomous vehicle driving system 2 is directly transferred to the switching device 13. Dependent on the state of the brake systems 7, 8 the switching device 13 switches to an EBS braking mode 18 or an auxiliary braking mode 19. In the EBS braking mode 18 the EBS brake system 7 is activated whereas the auxiliary brake system 8 is deactivated. Instead, in the auxiliary braking mode 19 the EBS brake system 7 is deactivated whereas the auxiliary brake system 8 is activated. In the EBS braking mode 18 the switching device 13 creates a (modified) brake demand 20. In the case that the brake demand 6 of the driver control system 4 is lower than the brake demand 5 of the autonomous vehicle driving system 2, the brake demand 20 corresponds to the brake demand 5. Instead, if the driver via the driver control system 4 creates a brake demand 6 being higher than the brake demand 5 of the autonomous vehicle driving system 2, the brake demand 20 corresponds to the brake demand 6 given by the driver.

The brake demand 20 transmitted to the EBS brake system 7 is processed by the EBS brake system 7 in a full function mode or EBS braking mode 21 of the EBS brake system 7 so that a brake pressure 10 biasing the brake actuator 12 is created.

A power supply 22 provides power to the EBS brake system 7. The power supply 22 is preferably a pressurized air reservoir of the vehicle which is supplied with compressed air by a compressor via an air processing unit responsible for a plurality of consumer circuits, the EBS brake system 7 being one of these consumer circuits. Alternatively or additionally the power supply might be a source of electric energy as a generator driven by the engine, a battery, an accumulator and/or a (super-)capacitor. The supplied electric energy is then used for operating the ECU of the EBS brake system 7 and/or for energizing solenoid valves of the EBS brake system 7.

Both the brake demand 6 of the driver control system 4 as well as the brake demand 5 of the autonomous vehicle driving system 2 (and/or the brake demand 20 calculated from the brake demands 5, 3 as specified above) are transferred to the auxiliary brake system 8. Within the frame of the invention different extends of the functionality are possible for the auxiliary brake system 8: It is possible that auxiliary brake system 8 provides the full functionality such that it provides the same functions as the EBS brake system 7. However, it is also possible that the functionality of the auxiliary brake system 8 is reduced when compared to the EBS brake system 7. In particular, the auxiliary brake system 8 might fulfill the following alternative or cumulative functions:
- The auxiliary brake system 8 might be able to bring the vehicle or the combination of a tractor with at least one trailer to a full stop which might be the case when detecting an emergency situation by the autonomous vehicle driving system 2 and/or upon the creation of a brake demand 5, 6 being a request for a braking for achieving a full stop;
- If an error occurs after the auxiliary brake system 8 has been active or intervened the auxiliary brake system 8 might stay available until a braking intervention has ended;
- The auxiliary brake system 8 might at least fulfill the secondary brake performance requested according to ECE-R13.

Preferably, the auxiliary brake system 8 is not allowed to control the brake actuator 12 immediately upon the switch by the switching device 13 from the EBS braking mode 18 to the auxiliary braking mode 19. Instead, upon such switching the auxiliary brake system 8 generates a take-over request 23 which is transmitted to an analyzing device 24. On the basis of the available parameters and sensor signals and on the basis of the evaluation of the operating states of the auxiliary brake system 8 the analyzing device 24 analyzes if the auxiliary brake system 8 should really take over. If this is the case the analyzing device 24 transmits a take-over confirmation 25 to the auxiliary brake system 8 which is then actually activated and starts its operation.

One possible criteria for the analyzing device 24 and for the creation of the take-over confirmation 25 is the analysis if the possible take-over leads to increased stability while braking and/or leads to increased brake performance over a brake action generated by the EBS brake system 7 in the full function mode 21.

The auxiliary brake system 8 comprises a status determining device 26 and/or subroutine which determines if the auxiliary brake system 8 is activated (so the switching device 13 is in the auxiliary braking mode 19 and the analyzing device 24 has sent the take-over confirmation 25) or if the auxiliary brake system 8 is deactivated. A feedback signal 27 can be transmitted from the auxiliary brake system 8 to the autonomous vehicle driving system 2. The feedback signal 27 can e.g. indicate that due to the use of the auxiliary brake system 8 the maximum speed of the vehicle controlled by the autonomous vehicle driving system 2 by a control of the engine and/or the drive train has to be reduced. A status signal 28 ("activated", "deactivated") is transmitted from the auxiliary brake system 8 to the autonomous vehicle driving system 2 and/or the driver control system 4. The driver control system 4 might include a signaling device 29 which upon receipt of the status signal 28 signals to the driver that the auxiliary brake system 8 has been activated. The signaling device might e.g. create an optical (warning lamp, display) or acoustic signal.

It is possible that the signals 27, 28 are sent equally and at the same times to all of the required requestors or recipients as the autonomous vehicle driving system 2 and the driver control system 4. However, preferably the signals 27, 28 are sent out individually for all configured requestors which might mean that the format or content of the signals 27, 28 differ from each other and/or the signals 27, 28 are sent out at differing time intervals or incidents or points in time.

Preferably, it should be possible that the signals 27, 28 are sent out with different update frequencies. It is e.g. possible that the update frequency depends on the fact if there is a change from the EBS braking mode 18 to the auxiliary braking mode 19 or not. It is possible that the update frequency is low in the case that the switching device 13 is in the EBS braking mode 18 or if the analyzing device 24 has denied the take-over confirmation 25 where as in the case that the EBS brake system 8 has been activated the update frequency is increased.

Power is provided to the auxiliary brake system 8 by a power supply 30. The power supply 30 might be a compressed air reservoir and/or an electric power source (cp. the additional information given for the power supply 22). However, preferably the power supply 30 is separated and independent on the power supply 22.

The brake system 3 further comprises an emergency maneuver device and/or subroutine 31. In the case that the emergency maneuver device/subroutine 31 detects that an emergence maneuver is required the emergency maneuver device/subroutine 31 creates an emergency brake demand 32. On the basis of the emergency brake demand 32 the auxiliary brake system 8 brings the vehicle (and any existing trailer 33) to a safe stop. Furthermore, it is possible that an emergency brake demand 32 created by the emergency maneuver device/subroutine 31 can be overwritten by an overwriting demand given by the driver or by any other control device. It is possible that upon creation of an emergency brake demand 32 the auxiliary brake system 8 controls the brake actuator 12 such that a fixed retardation of e.g. 1m/s² is created or the retardation for the emergency brake action is limited to a threshold as e.g. 1 m/s².

The auxiliary brake system 8 is also able to generate a brake demand 34 for the trailer 33 which might be a pneumatic signal correlating to the desired brake force of the trailer 33 and/or an electric signal. Here, the auxiliary brake system 8 should be able to utilize maximum braking capability of the trailer 33 in all situations, in particular also upon a maximum braking demand 5, 6, 20 or for an existing emergency brake demand 32.

Besides the full function mode 21 the EBS brake system 7 also comprises an EBS backup mode 35. The EBS backup mode 35 is used in the case that there is a brake demand 6 given by the driver via the driver control system 4 and that there is a failure and/or a reduced functionality of the EBS brake system 7 in the EBS braking mode 18 such that the auxiliary brake system 8 has been activated. In this extraordinary operating state the auxiliary brake system 8 is temporarily deactivated and the brake demand 6 given by the driver can be processed by the EBS brake system 7 in the EBS backup mode 35.

Preferably, in the EBS backup mode 35 the brake pressure for the brake actuator 12 is mechanically-pneumatically created by a depression of the brake pedal by the driver such that the movement of the brake pedal creates a movement of a valve controlling the brake pressure. Additionally, it is possible that when detecting that the EBS brake system 7 is working in the EBS brake up mode 35 the autonomous vehicle driving system 2 is deactivated.

Preferably, the brake system 3 provides the following additional functionalities:
- The auxiliary brake system 8 might comprise in interface to CAN.
- The maximum speed of the vehicle can be limited to a given limit value. E.g. during downhill autonomous vehicle driving system 2 might be able to create a brake demand 5 for limiting the speed to the defined maximum speed.
- The EBS brake system 7 and the auxiliary brake system 8 are separated from each other and independent on each other such that a failure on one of the systems 7 (8) does not affect the function of the other system 8 (7).
- It is possible that the autonomous vehicle driving system 2 communicates with a unit externally from the vehicle (in particular an electronic device of a traffic participant and of a pedestrian, of a bicycle rider or of another vehicle or of a stationary traffic regulating system as e.g. traffic lights or of a system or traffic sign for limiting the speed). The autonomous vehicle driving system 2 might be able to receive a brake request from one of these external systems and process the brake request and initiate a brake action if admissible and required. Here, it is also possible that an external brake request is transmitted to the autonomous vehicle driving system 2 by a bus system. When processing an external brake request there might be also a check for an authorization of the external brake request such that a first group of external brake requests being authorized will be processed by the autonomous vehicle driving system 2 whereas other external brake requests are ignored. The authorization might e.g. given by an identification of the source of the external brake request and the like.

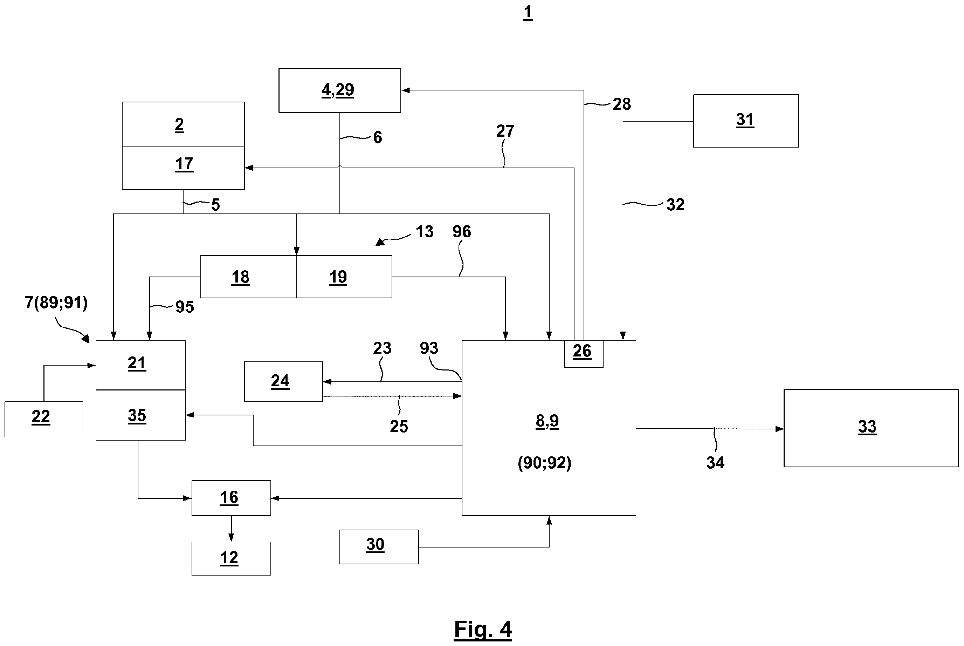

Generally, the embodiment shown in **Fig. 4** corresponds to the embodiment shown in Fig. 3. However, here the brake demands 5, 6 are each transmitted to the EBS brake system 7 and to the auxiliary brake system 8 (as well as to the switching device 13). In this case the switching device 13 transmits the activation/deactivation signals 95, 96 to the EBS brake system 7 and to the auxiliary brake system 8 for activating and deactivating the same. As described above for the embodiment shown in Fig. 2 it is possible that the auxiliary brake system 8 controls the function of the EBS brake system 7 (and vice versa).

Any of the features and functionalities described in relation with one of the Figs. 1 to 4 can also be (but do not have to be) realized for an embodiment shown in another one of Figs. 1 to 4 or for an embodiment described in the following.

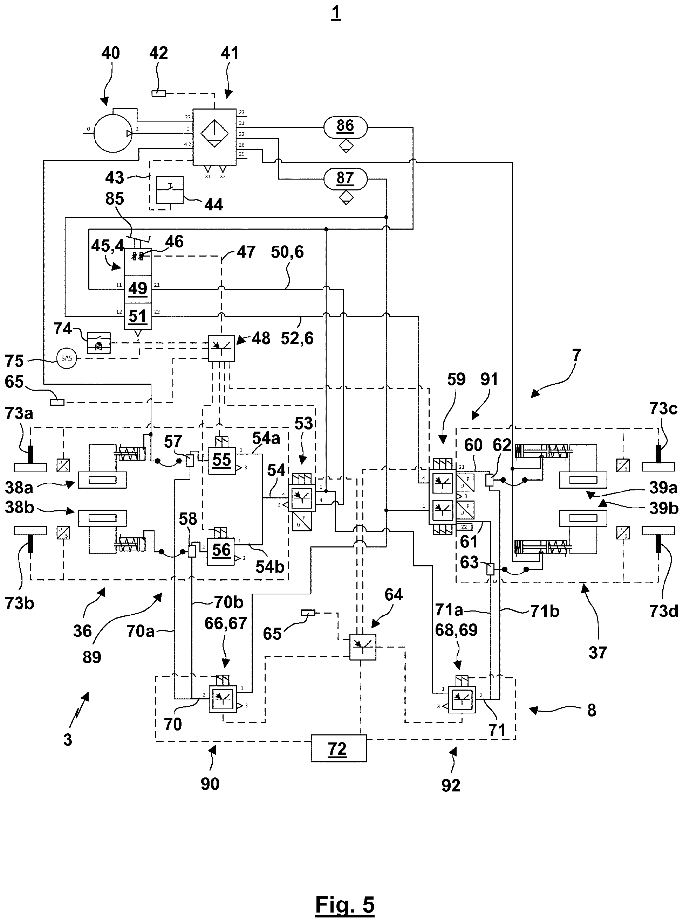

In Fig. 5 to 11 solid lines indicate pneumatic conduits whereas the dash lines indicate electric lines.

**Fig. 5** schematically shows a vehicle 1 comprising a front axle 36 and a rear axle 37 with associated wheels and brake actuators 38a, b and 39a, b. Here, the brake actuators 38a, b of the front axle 36 comprise service brake cylinders, whereas the brake actuators 39a, b comprise combination brake cylinders having a spring brake chamber and a service brake chamber.

In the vehicle 1 of Fig. 5 compressed air is provided by a compressor 40 and supplied by the compressor 40 to an air processing unit 41. The air processing unit 41 is of common design and e.g. comprises a pressure regulator, an air dryer, a central line with a check valve, a regeneration valve, circuit protection valves and outlet ports for a plurality of consumer circuits. Furthermore, the air processing unit 41 comprises a control port which is connected via a control line to a control port of the compressor 40 so that the air processing unit 41 controls the operation of the compressor 40 dependent on the pressures in the air processing unit 41 and the consumer circuits.

The air processing unit 41 is connected to a CAN SAE 1939 which is denoted with reference number 42. By a communication 43 the air processing unit 41 is connected to an electric parking brake switch or parking lever or parking actuation means 44. For providing the parking brake function triggered by manual operation of the electric parking brake switch 44 the air processing unit 41 comprises an outlet port connected to the service brake chamber of the brake actuators 38a, b for providing a parking brake force at the front axle 36. Another outlet port of the air processing unit 41 is connected to the spring brake chamber of the brake actuators 39a, b. For providing the parking brake force the air processing unit 41 deaerates the spring brake chambers of the brake actuators 39a, b.

In the brake system 3 the components related with the front axle 36 on the one hand and with the rear axle 37 on the other hand form separate consumer circuits with separate associated reservoirs 86, 87. Reservoir 86 provides compressed air to the brake actuators 38a, 38b of the front axle 36 whereas reservoir 87 provides compressed air to the brake actuators 39a, 39b of the rear axle 37.

The driver control system 4 comprises a brake pedal unit 45. In the brake pedal unit 45 the demand of the driver applied by the depression of the brake pedal 85 (or of another brake actuation means) is processed in three ways:
a) By a pair of brake pedal sensors 46 or redundant pairs of brake pedal sensors 46a, 46b the depression of the brake pedal 85 is transformed into electrical signals which are transferred via a signal line 47 to an EBS control unit 48.
b) A brake pedal valve 49 is supplied with compressed air by the reservoir 86 and generates a front axle brake pressure in a front brake control line 50. The brake pedal valve 49 generates the front axle brake pressure dependent on the depression of the brake pedal 85.
c) In a corresponding way a brake pedal valve 51 is supplied with compressed air by the reservoir 87 and generates a rear axle brake pressure in a rear brake control line 52. The rear axle brake pressure also depends on the depression of the brake pedal 85.

The front axle brake pressure is transmitted by the front brake control line 50 to a one channel modulator 53. In an outlet line 54 the one channel modulator 53 (possibly under the control of the EBS control unit 48) generates a modulated front axle brake pressure on the basis of the front axle brake pressure. The outlet line 54 branches to outlet line branches 54a, 54b leading to ABS valves 55, 56 of common design. Also the ABS valves 55, 56 are controlled by the EBS control unit 48. The ABS valves 55, 56 are only able to reduce the pressure in the outlet line 54 to a reduced pressure at the outlet of the ABS valve 55, 56 which is done for reducing or avoiding slippage at one wheel and for reduced traction and/or for increasing the driving stability. The outlet pressure of the ABS valve 55 is transmitted via a shuttle valve 57 to the brake actuator 38a associated with the right wheel end of the front axle 36. In a corresponding way the outlet pressure of the ABS valve 56 is transmitted via a shuttle valve 58 to the brake actuator 38b of the left wheel end of the front axle 36. Accordingly, the path from the reservoir 86 via the brake pedal valve 49, the one channel modulator 53 and the ABS valves 55, 56 to the brake actuators 38a, 38b allows the generation of a brake force at the front axle which depends on the depression of the brake pedal 85 of the brake pedal unit 45 with the option of a brake force modulation by the one channel modulator 53 together for both brake actuators 38a, b and in individual ABS control by the ABS valves 55, 56 for the right wheel end and the left wheel end.

The rear axle brake pressure is transmitted by the rear brake control line 52 to a two channel modulator 59 which is also controlled by the ABS control unit 48 and fulfills both the modulation function as well as the ABS function of modifying the brake pressures at the rear axle 37 for increasing the pneumatic driving stability. The two channel modulator 59 creates individual brake pressures in the brake lines 60, 61. Brake line 60 is connected via a shuttle valve 62 to the service brake chamber of the brake actuator 39a associated with the right wheel end of the rear axle 37. In a corresponding way the brake line 61 is connected via a shuttle valve 63 to a service brake chamber of the brake actuator 39b associated with the left wheel end of the rear axle 37.

In the described way it is possible to generate a brake force at the brake actuators 39a, b of the rear axle 37 which depends on the depression of the brake pedal of the brake pedal unit 45, which can be individually for each wheel end modulated by the two channels modulator 59 and which can be reduced for avoiding slippage and/or for increasing the dynamic driving stability.

The above described signal paths provide a first way of applying the brakes by depressing the brake pedal of the brake pedal unit 45.

However, it is also possible to apply the brakes by an autonomous vehicle driving system 2 which is not shown in Fig. 5. The autonomous vehicle driving system 2 creates a brake demand 5 which can be transmitted by any signal connection or by CAN to the EBS control unit 48 and which then controls the one channel modulator 53, the ABS valves 55, 56, the two channel modulator 59 for generating the brake forces requested by the autonomous vehicle driving system 2 at the front axle 36 and the rear axle 37. For an existing brake demand 5 of the autonomous vehicle driving system 2 the one channel modulator 53 and the two channel modulator 59 are not necessarily supplied with compressed air via the front brake control line 50 and the rear brake control line 52 because the brake pedal of the brake pedal unit 55 is not necessarily depressed.

For allowing the generation of brake pressures by the modulators 53, 59 the modulators 53, 59 comprise supply ports. The supply port of the one channel modulator 53 is connected to the reservoir 86 whereas the supply port of the two channel modulator 59 is connected to the reservoir 87.

In this way for a given brake demand of the autonomous vehicle driving system 2 the brake system 3 is able to generate the required brake forces. Here, the modulators 53, 59 are also able to modulate the brake pressure over the brake demand 5 of the autonomous vehicle driving system 2 and the modulators 53, 59 and the ABS valves 55, 56 are also able to further reduce the brake pressure for avoiding slippage and/or for increasing the driving stability.

The autonomous vehicle driving system 2 might also generate a plurality of brake demands 5a, 5b, 5c being specific for the brake actuator 38a (so that the specific brake demand is processed by the ABS valve 55 and the one channel modulator 53), being specific for the brake actuator 38 b (so that the brake demand is processed by the ABS valve 56 and the one channel modulator 53) or being specific for one or each of the brake actuators 39a, 39b (so that the specific brake demand is processed by the two channel modulator 59).

Accordingly, additional to the creation of brake forces by a depression of the brake pedal of the brake pedal unit 45 it is possible to apply the brakes by the autonomous vehicle driving system 2.

The above described two different routes for braking the vehicle (namely the braking by the depression of the brake pedal 85 and the braking by the autonomous vehicle driving system 2) are provided in the EBS braking mode 18. These routes use the EBS brake system 7 as the braking system when everything in the brake system 3 is in good order or a level of failure is present for which the brake performance of the EBS brake system 7 is still sufficient or better than the brake performance of the auxiliary brake system 8. However, in the case of the failure of the EBS brake system 7 or a reduction of the performance of the EBS brake system 7, the brake system 3 is switched to operation in the auxiliary braking mode 19.

The auxiliary brake system 8 comprises an auxiliary brake control unit 64. The auxiliary brake control unit 64 is connected to CAN SAEJ 1939 which is denoted with reference numeral 65. The auxiliary brake control unit 64 receives the electric brake demand 6 set by the driver via a depression of the brake pedal 85 and sensed by the sensor (s) 46 as well as the brake demand 5 of the autonomous vehicle driving system 2. The auxiliary brake control unit 64 might receive these signals directly or from the EBS control unit 48 or under interposition of the modulators 53, 59. For fulfilling the redundant auxiliary brake function the auxiliary brake control unit 64 controls an auxiliary front axle valve 66 (here embodied as pivoting anchor valve 67) and controls an auxiliary rear axle valve 68 (here embodied as pivoting anchor valve 69).

A supply port of the auxiliary front axle valve 66 is connected to the reservoir 87 whereas a supply port of the auxiliary rear axle valve 68 is connected to the reservoir 86. The outlet pressure of the auxiliary front axle valve 66 is transmitted by an outlet line 70 branching to outlet line branches 70 a, 70 b to the inlets of the shuttle valves 57, 58 and so to the service brake chambers of the brake actuators 38a, b. In a corresponding way the outlet pressure of the auxiliary rear axle valve 68 is transmitted via an outlet line 71 branching to outlet line branches 71a, 71 b to the other inlet ports of the shuttle valves 62, 63 and so to the service brake chambers of the brake actuators 39a, b.

Electric power is supplied to the auxiliary brake control unit 64 and to the auxiliary front axle valve 66 and the auxiliary rear axle valve 68 by an independent electric power supply 72.

For the shown embodiment the valves 66, 68 generate one single brake pressure which is then used for the brake actuators 38a, b respectively 39a, b at both wheel ends. However, for a modified embodiment it is also possible that the valves 66, 68 create independent brake pressures transmitted to the different wheel ends.

An external brake request can e.g. be transmitted to the EBS control unit 48 and/or to the auxiliary brake control unit 64 via CAN SAE J1939 (65).

As an option, in the brake system 3 pad wear sensor 73a, 73b, 73c, 73d can be provided. The signals of the pad wear sensor 73a, 73b, 73c, 73d are also processed by the EBS control unit 48, the auxiliary brake control unit 64, at least one of the modulators 53, 59 and/or the autonomous vehicle driving system 2.

Furthermore, the vehicle 1 might comprise an actuation unit 74 which might be a push-bottom and the like. By means of the actuation unit 74 the driver is able to select an off road ABS mode, to activate and deactivate a lift axle and the like.

Furthermore, the vehicle 1 might comprise a steering angle sensor 75.

The signal of the actuation unit 74 and/or the signal of the steering angle sensor 75 can also be transmitted to the EBS control unit 48, to the auxiliary brake control 64, to the modulators 53, 59, to the ABS valves 55, 56 and/or to the autonomous vehicle driving system 2.

The brake system of Fig. 5 allows the following different operational modes:
a) In a normal operational mode which is the EBS braking mode 18 a brake demand 5, 6 can be generated by the driver and/or the autonomous vehicle driving system 2. Due to the fact that in the EBS braking mode 18 the EBS brake system 7 works properly the EBS brake system 7 is activated whereas the auxiliary brake system 8 is deactivated.
b) In the case that the EBS brake system 7 has a performance being lower than that of the auxiliary brake system 8 a request is transmitted to the auxiliary brake system 8 for taking over. This might be the case both for the creation of a brake demand 5 by the autonomous vehicle driving system 2 and for the creation of a brake demand 6 by the driver.
c) In the case that the EBS brake system 7 has a failure or has a performance being lower that of the auxiliary brake system 8 (and a request according to b) for taking over has been sent and the take-over has been confirmed) the EBS braking mode 18 is left and the auxiliary braking mode 19 applies. In this case the auxiliary brake system 8 is activated.
d) In the case that the EBS brake system 7 has a failure and there is a brake demand 6 given by the driver the auxiliary brake system 8 can also be deactivated and the braking is controlled in the EBS backup mode 35.

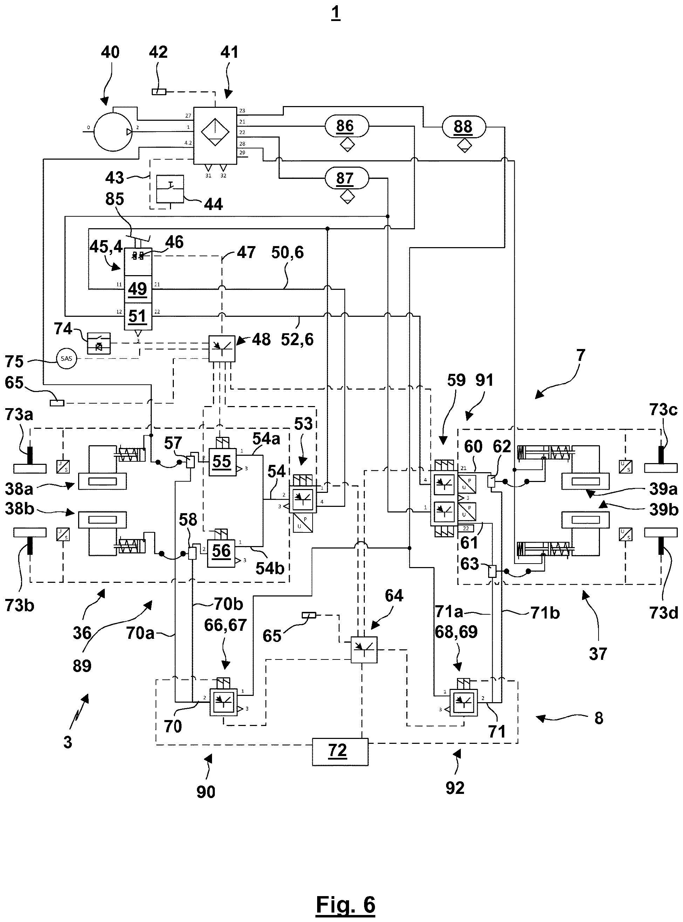

For the embodiment shown in **Fig. 6** generally the same as described for Fig. 5 applies. However, here the auxiliary brake system 8 is not supplied with compressed air by the reservoirs 86, 87. Instead, in a separate consumer circuit an additional reservoir 88 is provided which is only responsible for supplying compressed air to the valves 66, 68, so that the reservoir 88 is directly connected to the supply ports of these valves 66, 68.

For the embodiment shown in Figs. 5 and 6 the auxiliary brake system 8 is preferably not connected to the brake pedal unit 45. In Fig. 5 the reservoir 86 is responsible for supplying the EBS brake system of the front axle 36 with compressed air whereas the reservoir 86 supplies compressed air to the valve 68 associated with the rear axle. In a corresponding way the reservoir 87 supplies compressed air to the EBS brake system for the rear axle 37 whereas the reservoir 87 supplies compressed air to the auxiliary front axle valve 66 associated with the front axle 36. In Fig. 5 the auxiliary brake system 8, here the auxiliary brake control unit 64 receives the wheel speed information from the EBS brake system 7.

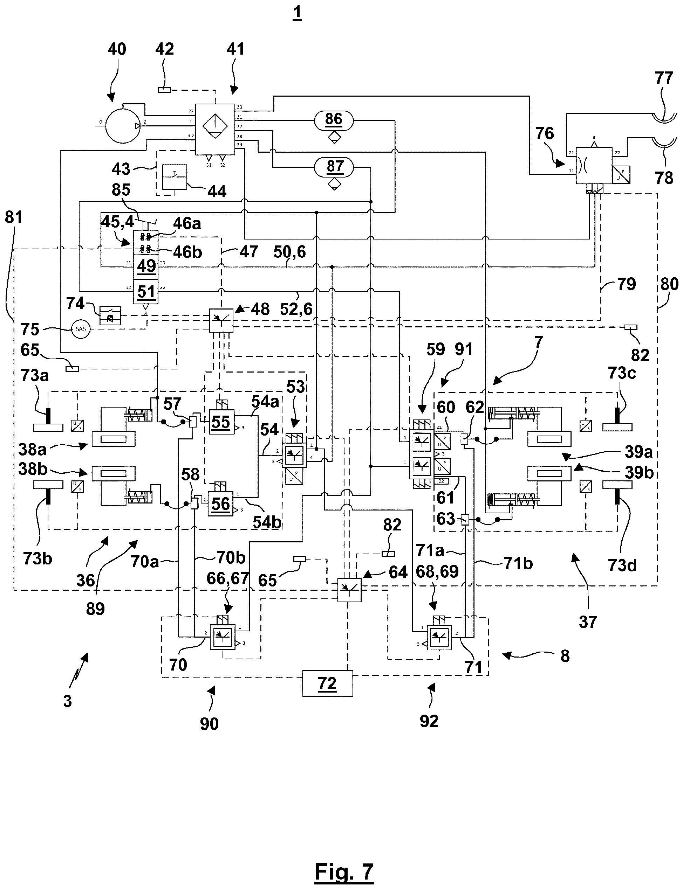

The embodiment of **Fig. 7** generally corresponds to the embodiments of Figs. 5 and 6. Further, for this embodiment one consumer circuit comprises a trailer control valve 76 providing at one outlet port the supply pressure for a supply coupling head 77 and the brake control pressure for a brake control coupling head 78. The coupling head 77, 78 can be connected a trailer.

The brake system 3 of Fig. 7 is able to generate a brake pressure at the brake control coupling head 78 for the trailer upon a brake demand 5 of the autonomous vehicle driving system 2 and/or a brake demand 6 of a driver.

The trailer brake pressure at the brake control coupling head 78 can be generated both in the EBS braking mode 18 as well as in the auxiliary braking mode 19. For that purpose a control port of the trailer control valve 76 is connected via a control line 79 to the EBS control unit 48 allowing a control of the trailer control valve 76 by the EBS control unit 48. Additionally, the same control port or another control port of the trailer control valve 76 is connected by a control line 80 to the auxiliary brake control unit 64 allowing a control of the trailer control valve 76 by the auxiliary brake control unit 64.

As another optional modification in Fig. 7 the brake pedal unit 45 comprises redundant sensors 46a, 46b. As for the embodiments of Figs. 5, 6 the signals of the pair of brake pedal sensors 46a are transmitted to the EBS control unit 48. The signals of the brake pedal sensors 46b are transmitted by a signal line 81 to the auxiliary brake control unit 46.

Accordingly, for the embodiment of Fig. 7 there are three redundant ways for processing a brake demand 6 of the driver by a depression of the brake pedal:
a) It is possible that the brake demand 6 is converted by the valves 49, 51 into a pneumatic brake pressure.
b) It is possible that the brake demand 6 is sensed by the pair of brake pedal sensors 46a and transmitted to the EBS control unit 48 which then controls a suitable brake pressure for the brake actuators 38, 39 of the front and rear axle 36, 37.
c) In particular in the case of a failure of one of the pair of brake pedal sensors 46a the brake demand 6 of the driver can be sensed by the pair of brake pedal sensors 46b and the auxiliary brake control unit 64 is used for controlling the required brake pressure at the brake actuators of the front and rear axle 36, 37 via the valves 66, 68.

The pairs of redundant brake pedal sensors 46a, 46b provides a double redundancy: when the pair of brake pedal sensors 46a (or 46b) is used a failure of one of the brake pedal sensors 46a (or 46b) can be detected on the basis of a comparison of the brake pedal signals of the two sensors. If the comparison leads to the result that one of the redundant brake sensors 46a (or 46b) of the pair of brake pedal sensor 46a has a failure a take-over request for use of the other pair of brake pedal sensor 46b can be generated.

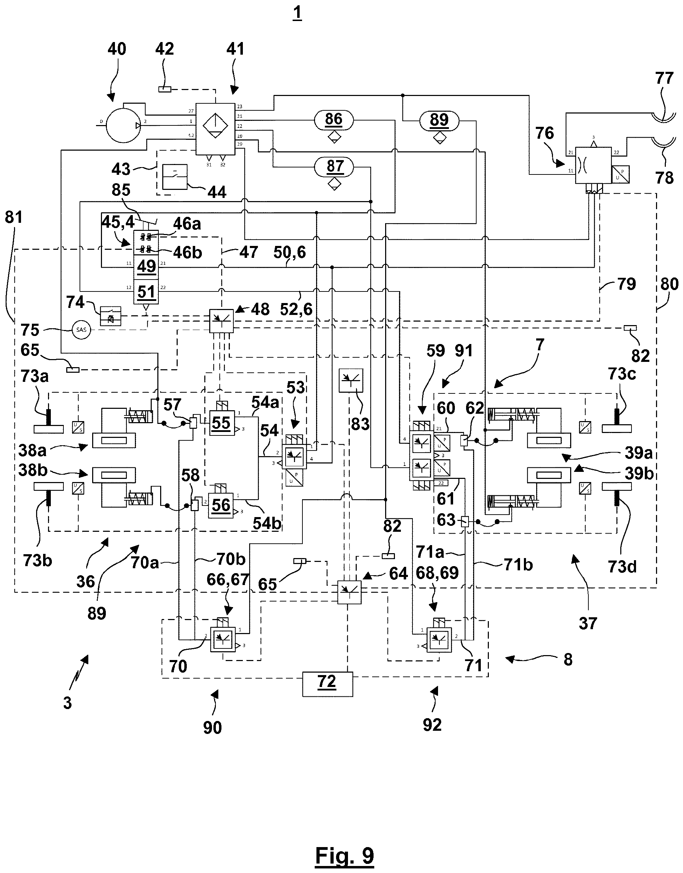

Whereas for the embodiment shown in **Fig. 9** generally the same applies as explained for the former embodiments, here the additional reservoir 88 of Fig. 6 is used in a multifunctional way because the reservoir 88 is also used as the source of compressed air for the supply port of the trailer control valve 76.

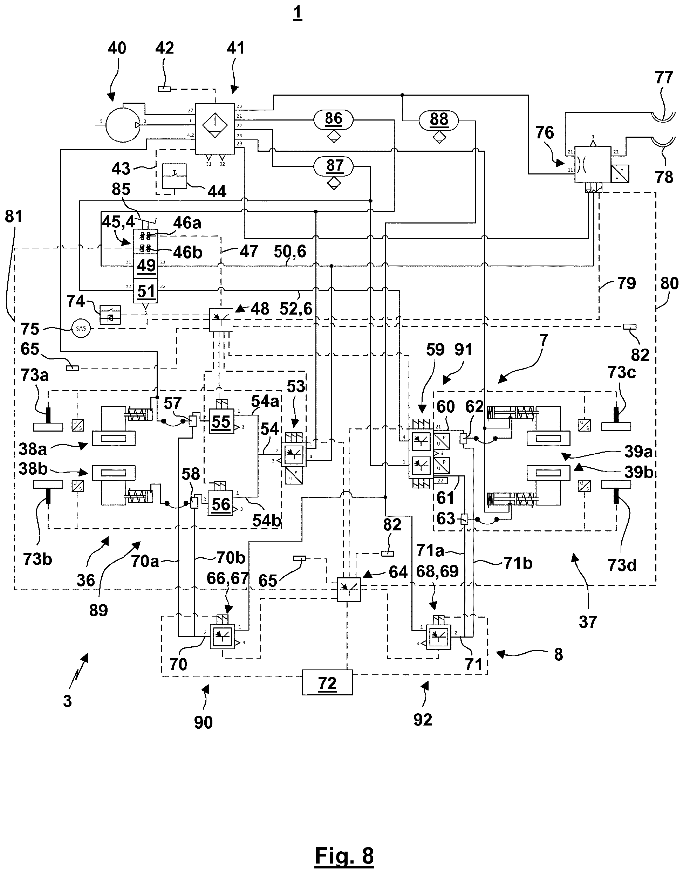

For the embodiments shown in Fig. 7 and 8 there might be a redundant control of the braking of the trailer, namely a control via the brake control coupling head 78 via a pneumatic path as well as an electronic control via the ISO 11992 interface denoted with the reference number 82, possibly by use of a router receiving the trailer brake signals both from the EBS control unit 48 as well as from the auxiliary brake control unit 64 and creating and transmitting one single electric trailer brake signal to the trailer.

For the embodiment shown in Fig. 9 the signal from the wheel speed sensors is transmitted from the one channel modulator 53 to the EBS control unit 48. Furthermore, here an additional control unit 83 is shown which is part of or forms the autonomous vehicle driving system 2. Here, the autonomous vehicle driving system 2 does not communicate or transmit the brake demand 5 to the EBS control unit 48 but directly transfers the brake demand 5 to a signal port of the one channel modulator 53 and a signal port of the auxiliary brake control unit 64.

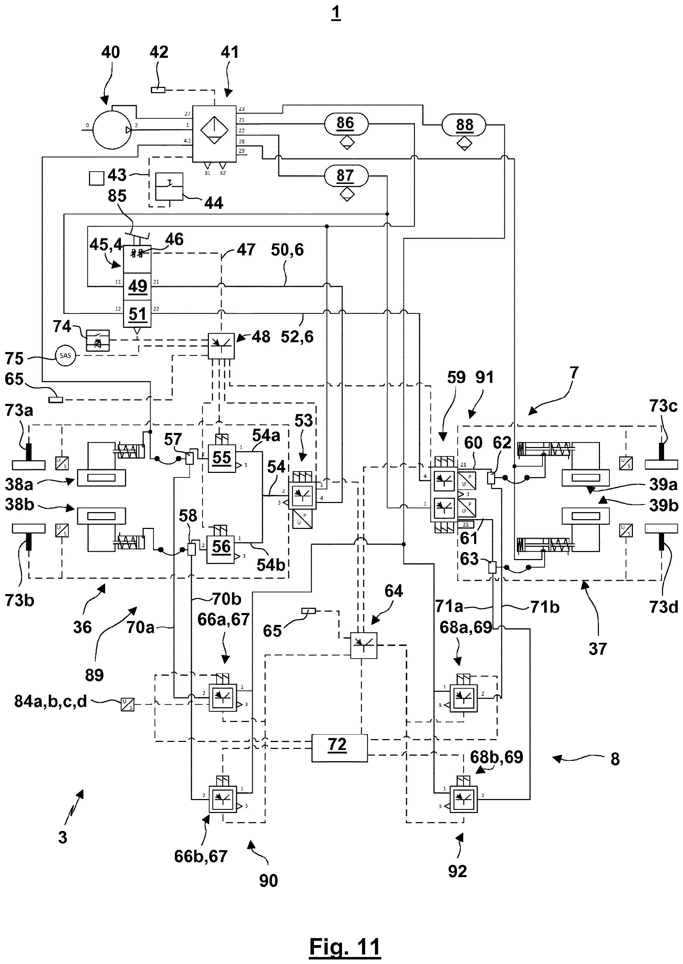

For the embodiment shown in **Fig. 11** there are an auxiliary right front axle valve 66a, an auxiliary left front axle valve 66b, an auxiliary right rear axle valve 68a and an auxiliary left rear axle valve 68b for separately controlling the brake pressures for the different wheel sides of the front axle 36 and the rear axle 37 in the auxiliary braking mode 19.

Furthermore, there are four additional wheel speed sensors 84a, 84b, 84c, 84d. The signal of the wheel speed sensors 84 is directly transmitted to the associated auxiliary front axle valve 66a, b and auxiliary rear axle valve 68a, b so that the slip control can be performed in a redundant and independent way in the auxiliary braking mode 19.

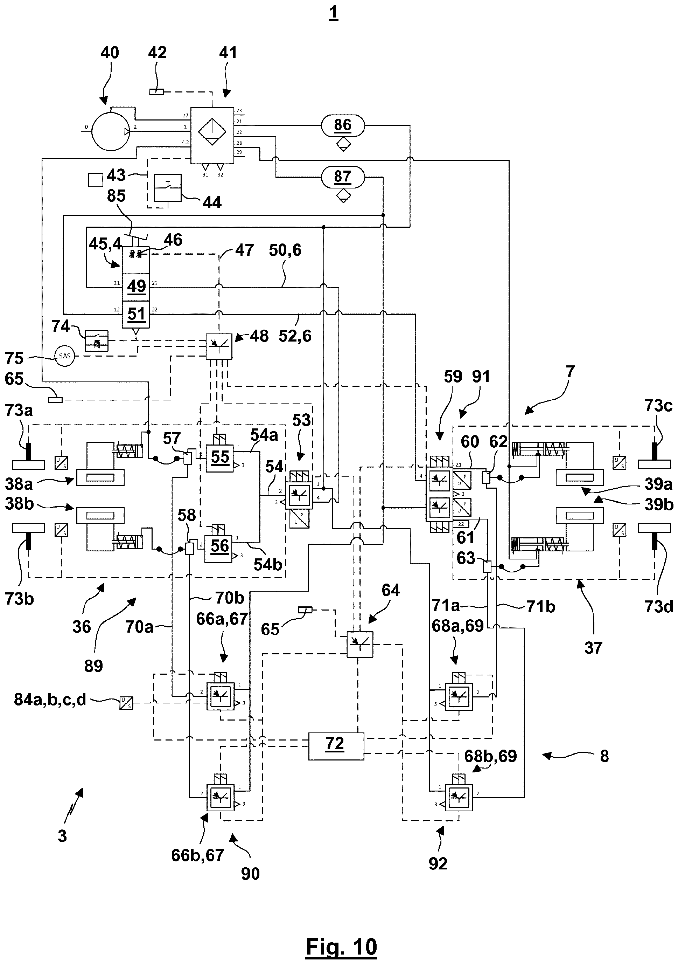

The embodiment shown in Fig. 11 generally corresponds to the embodiment in **Fig. 10****.** Further, here the additional reservoir 88 is used for supplying compressed air to the auxiliary front axle valves 66a, b and auxiliary rear axle valves 68a, b.

In the present specification the same reference number is in some cases used for components that are equal or similar with respect to the design and/or functionality. In this case, the differing components are distinguished by additional letters a, b, ... Reference is made to these components also without the additional letter a, b, ... which then applies for single or all of these components denoted with the reference number.

In the present application systems, units or devices (as e.g. the autonomous vehicle driving system 2, the brake system 3, the driver control system 4, the EBS brake system 7, the auxiliary brake system 8, the switching device 13, the analyzing device 24, ...) have been shown and described for fulfilling the required functionalities. However, it is also possible that there is no dedicated system, unit or device for fulfilling the related functionality. Instead, the functionality might be provided by a control logic or software which might be executed by an ECU of the mentioned system, unit or device or an ECU of any other system, unit or device. To mention only some non-limiting examples the switching device 13 and/or the analyzing device 24 might be embodied as a software which is executed on a ECU of the autonomous vehicle driving system 2, of the EBS brake system 7 and/or the auxiliary brake system 8.

It is possible that in the vehicle 1 and the brake system 3 the pressure in at least one of the reservoirs 86, 87 is monitored. If the pressure in one of the reservoirs falls below a given threshold the supply of compressed air is switched from this reservoir to another reservoir or to the additional reservoir 88.

The EBS brake system 7 or the modulators 53, 59 might comprise an internal monitoring. In the case that the internal monitoring detects irregularities, a take-over request 97, 98 can be generated and the system might be switched from the EBS braking mode 18 to the auxiliary braking mode 19. The monitoring might e.g. analyze the control currents of the solenoid valves of the EBS brake system 7. In the case of a defect of a wire of a coil this can be detected by an interruption of the current. It is possible that in this case the modulator 53, 59 sends the take-over request 97, 98 to the switching device 13.

The monitoring of the function of the EBS braking mode 18 might base on an analysis of a wheel speed sensor. In the case that a brake demand 5, 6 requests a brake action but the wheel speed sensors signal that the EBS brake system 7 is not able to produce a brake pressure for generating a decelerating braking force corresponding to the brake request 5, 6, this can be taken as an indicator that a switch from the EBS braking mode 18 to the auxiliary braking mode 19 is required.

On the basis of a yaw sensor of the vehicle the switching device 13 might be able to detect that the EBS brake system 7 is not able to generate the same braking forces at the different wheels of the vehicle which results in an overall braking torque about the vertical axis differing from zero. This might e.g. be taken as an indicator that a brake actuator 12 at one wheel end does not work properly.

In the case that an ECU of the EBS brake system 7 detects that it does not receive a brake pedal signal from one of the redundant brake pedal sensors 46 the ECU of the EBS brake system 7 might send a take-over request to the switching device 13.

Preferably, the auxiliary brake system 8 is able to create and transmit a brake pressure to the brake actuators 12 at all of the wheel ends of the vehicle 1. This might be the case in one signal circuit or in a plurality of circuits.

It is possible that a switch from the EBS braking mode 18 to the auxiliary braking mode 19 (in particular forced by the switching device 13) and/or a take-over confirmation 25 (in particular by the analyzing device 24) bases on a self-test. The self-test is in particular performed when starting the vehicle at stillstand. It is preferred that the self-test is run through only when also the parking brake is activated. In the self-test the autonomous vehicle driving system 2, the EBS brake system 7 or the auxiliary brake system 8 preferably produces a small brake pressure. If a pressure sensor associated with the brake actuator 12 or a brake line leading to the brake actuator 12 senses the small brake pressure the self-test leads to the result that the system works properly. Instead, if the generated brake pressure does not increase this can be taken as an indicator that the brake system tested by the self-test does not work properly. As an alternative or cumulative option it is possible that during the self-test first the EBS brake system 7 is operated for generating a specific brake pressure and then the auxiliary brake system 8 is used for controlling the same brake pressure. If on the basis of the self-test the EBS brake system 7 on the one hand and the auxiliary brake system 8 on the other hand produce the same brake pressures, both systems work properly - otherwise one of the systems 7, 8 has a failure.

### LIST OF REFERENCE NUMERALS

- 1: vehicle
- 2: autonomous vehicle driving system
- 3: brake system
- 4: driver control system
- 5: brake demand
- 6: brake demand
- 7: EBS brake system
- 8: auxiliary brake system
- 9: pivoting anchor valve
- 10: brake pressure
- 11: brake pressure
- 12: brake actuator
- 13: switching device
- 14: brake pressure line
- 15: brake pressure line
- 16: shuttle valve
- 17: submodule
- 18: EBS braking mode
- 19: auxiliary braking mode
- 20: brake demand
- 21: full function mode
- 22: power supply
- 23: take-over request
- 24: analyzing device
- 25: take-over confirmation
- 26: status determining device/subroutine
- 27: feedback signal
- 28: status signal
- 29: signaling device
- 30: power supply
- 31: emergency maneuver device/subroutine
- 32: emergency brake demand
- 33: trailer
- 34: brake demand
- 35: EBS backup mode
- 36: front axle
- 37: rear axle
- 38: brake actuator
- 39: brake actuator
- 40: compressor
- 41: air processing unit
- 42: SAE 1939
- 43: communication
- 44: electric parking brake switch
- 45: brake pedal unit
- 46: (pair of) brake pedal sensor(s)
- 47: signal line
- 48: EBS control unit
- 49: brake pedal valve
- 50: front brake control line
- 51: brake pedal valve
- 52: rear brake control line
- 53: one channel modulator
- 54: outlet line
- 55: ABS valve
- 56: ABS valve
- 57: shuttle valve
- 58: shuttle valve
- 59: two channel modulator
- 60: brake line
- 61: brake line
- 62: shuttle valve
- 63: shuttle valve
- 64: auxiliary brake control unit
- 65: CAN SAE J1939
- 66: auxiliary front axle valve
- 67: pivoting anchor valve
- 68: auxiliary rear axle valve
- 69: pivoting anchor valve
- 70: outlet line
- 71: outlet line
- 72: electric power supply
- 73: pad wear sensor
- 74: actuation unit
- 75: steering angle sensor
- 76: trailer control valve
- 77: supply coupling head
- 78: brake control coupling head
- 79: control line
- 80: control line
- 81: signal line
- 82: electronic control interface ISO 11992
- 83: control unit
- 84: wheel speed sensor
- 85: brake pedal
- 86: reservoir
- 87: reservoir
- 88: reservoir
- 89: first EBS brake system part
- 90: fist auxiliary brake system part
- 91: second EBS brake system part
- 92: second auxiliary brake system part
- 93: interface
- 94: electric brake demand
- 95: activation/deactivation signal
- 96: activation/deactivation signal
- 97: take-over request
- 98: take-over request

## Claims

1. Autonomously driven vehicle (1) comprising
a) a brake system (3) with an EBS brake system (7) and an auxiliary brake system (8),
b) an autonomous driving control system (2) with control logic for
ba) controlling autonomous driving and
bb) automatically inducing a brake action of the brake system (3),
c) the brake system (3) comprising a switching device (13) and/or switching logic which deactivates the EBS brake system (7) and activates the auxiliary brake system (8) when detecting an at least reduced brake performance of the EBS brake system (7),
d) the EBS brake system (7) and the auxiliary brake system (8) processing the same brake demand (5) generated by the autonomous driving control system (2) without an adaptation of the brake demand (5) when switching from the EBS brake system (7) to the auxiliary brake system (8),
e) the EBS brake system and the auxiliary brake system being connected to at least one brake actuator via parallel brake paths.

2. Vehicle (1) of claim 1 comprising a brake system (3) with
a) an EBS brake system (7) which can be operated in an electropneumatic EBS braking mode (18) and a pneumatic EBS backup mode (35),
b) an auxiliary brake system (8) which can be operated in an electropneumatic auxiliary braking mode (19) and
c) a switching device (13) or switching logic and/or an analyzing device (24) or analyzing logic for switching the operation of the brake system (3) between the EBS braking mode (18), the EBS backup mode (35) and the auxiliary braking mode (19).

3. Vehicle (1) of claim 1 or 2, **characterized in that** the auxiliary brake system (8) comprises a pivoting anchor valve (9) which controls a brake pressure in at least one brake actuator (12; 38, 39).

4. Vehicle (1) of one of claims 1 to 3, **characterized in that** the auxiliary brake system (8) and the EBS brake system (7) are connected to at least one brake actuator (12; 38, 39) via a shuttle valve (16).

5. Vehicle (1) of one of claims 1 to 4, **characterized in that**
a) a first EBS brake system part (89) and a first auxiliary brake system part (90) are connected to at least one brake actuator (38a, 38b) of a first axle (36) and
b) a second EBS brake system part (91) and a second auxiliary brake system part (92) are connected to at least one brake actuator (39a, 39b) of a second axle (37).

6. Vehicle (1) of claim 5, **characterized in that**
a) a first reservoir (86) supplies compressed air to the first EBS brake system part (89) and the second auxiliary brake system part (92) and/or
b) a second reservoir (87) supplies compressed air to the second EBS brake system part (91) and the first auxiliary brake system part (90).

7. Vehicle (1) of claim 5 or 6, **characterized in that** the switching device (13) and/or the analyzing device (24) comprises control logic which
a) determines if there is an at least reduced brake performance in the first EBS brake system part (89) or in the second EBS brake system part (91) and
b) in the case that
ba) there is only an at least reduced brake performance of the first EBS brake system part (89) deactivates the first EBS brake system part (89) and activates the first auxiliary brake system part (90) whereas the second EBS brake system part (91) remains activated and the second auxiliary brake system part (92) remains deactivated and/or
bb) there is only an at least reduced brake performance of the second EBS brake system part (91) deactivates the second EBS brake system part (91) and activates the second auxiliary brake system part (92) whereas the first EBS brake system part (89) remains activated and the first auxiliary brake system part (90) remains deactivated.

8. Vehicle (1) of claim 5 or 6, **characterized in that** the switching device (13) and/or the analyzing device (24) comprises control logic which
a) determines if there is an at least reduced brake performance in the first EBS brake system part (89) or in the second EBS brake system part (91) and
b) in the case that there is an at least reduced brake performance of one of the EBS brake system parts (89, 91) switches the brake system (3) from the ABS braking mode (18) to the auxiliary braking mode (19) wherein the first EBS brake system part (89) and the second EBS brake system part (91) are deactivated and the first auxiliary brake system part (90) and the second auxiliary brake system part (92) are activated.

9. Vehicle (1) of one of claims 1 to 8, **characterized in that** the EBS brake system (7) comprises a pneumatic EBS backup mode (35), the pneumatic EBS backup mode (35) being activated if both
a) a brake demand (6) of the driver is present and
b) the EBS brake system (7) has an at least reduced performance.

10. Vehicle (1) of one of claims 1 to 9, **characterized in that** a status determining device (26) or status determining logic is provided which determines and/or signals if the auxiliary brake system is or will be activated and/or which determines the status of the auxiliary brake system (8) and/or sends the status to at least one other component.

11. Vehicle (1) of one of claims 1 to 10, **characterized in that** the switching device (13) is a part of an EBS control unit (48) which activates the auxiliary brake system (8) in an auxiliary braking mode (19).

12. Vehicle (1) of one of claims 1 to 11, **characterized in that** the brake system (3) comprises the following operating modes:
a) an EBS braking mode (18) wherein the EBS brake system (7) is activated and the auxiliary brake system (8) is deactivated, the EBS braking mode (18) being activated or upheld if control logic detects that the EBS brake system (7) works properly, the EBS braking mode (18) being used for processing a brake demand (6) of a driver and a brake demand (5) of the autonomous driving control system (2) and/or
b) an auxiliary braking mode (19) wherein the EBS brake system (7) is deactivated and the auxiliary brake system (8) is activated, the auxiliary braking mode (19) being activated
ba) if control logic detects that the brake performance of the EBS brake system (7) is lower than the brake performance of the auxiliary brake system (8) and/or
bb) if control logic detects that the EBS brake system (7) does not work properly,
the auxiliary braking mode (19) being used for processing a brake demand (6) of a driver and a brake demand (5) of the autonomous driving control system (2) and/or
c) a pneumatic EBS backup mode (35) wherein the EBS brake system (7) is controlled by the driver without electronic support and the auxiliary brake system (8) is deactivated.

13. Vehicle (1) of one of claims 1 to 12, **characterized in that**
a) a first wheel speed sensor (84a) and a second wheel speed sensor (84b) are associated with a vehicle wheel and
b) a wheel speed signal from the first wheel speed sensor (84a) is processed by the EBS brake system (7) and a wheel speed signal from the second wheel speed sensor (84b) is processed by the auxiliary brake system (8).

14. Vehicle (1) of one of claims 1 to 13, **characterized in that**
a) a first brake pedal sensor (46a) and a second brake pedal sensor (46b) are associated with a brake pedal unit (45) and
b) a brake pedal signal from the first brake pedal sensor (46a) is processed by the EBS brake system (7) and a brake pedal signal from the second brake pedal sensor (46b) is processed by the auxiliary brake system (8).

15. Vehicle (1) of one of claims 1 to 14, **characterized in that** the brake system (3) comprises an interface (93), the interface (93) being connected to an analyzing device (24) and the analyzing device (24) comprising control logic for
a) processing a take-over request (23) submitted from the brake system (3) via the interface (93) to the analyzing device (24) and determining if the take-over request (23) can be confirmed or not and
b) sending a take-over confirmation (25) to the brake system (3) which then triggers the deactivation of the EBS brake system (7) and the activation of the auxiliary brake system (8).

16. Vehicle (1) of one of claims 1 to 15, **characterized in that** for switching from the EBS braking mode (18) to the auxiliary braking mode (19) the switching device (13) and/or for confirming the take-over request (23) the analyzing device (24) consider/considers
a) vehicle driving conditions and/or
b) environmental parameters and/or
c) driver inputs and/or
d) a brake performance of the EBS brake system (7) and/or
e) a brake performance of the auxiliary brake system (8).

17. Vehicle (1) of one of claims 1 to 16, **characterized in that** a driver operated system (4) is provided for inducing a brake action upon a brake demand (6) given by the driver.

18. Vehicle (1) of one of claims 1 to 17, **characterized in that** the EBS brake system (7) or EBS brake system part (89; 91) and the auxiliary brake system (8) or the auxiliary brake system part (90; 92) have
a) separate electric power sources for providing electric energy and/or
b) separate reservoirs (86, 87) for providing compressed air.

19. Vehicle (1) of one of claims 1 to 18, **characterized in that**
a) control logic is provided which guarantees a priority of the brake demand (5) of an autonomous vehicle driving system (2) over the brake demand (5) of the driver operated system (2) such that
aa) in the case that the brake demand (5) of the autonomous vehicle driving system (2) is higher than the brake demand (6) of the driver operated system (4) the brake demand (5) of the autonomous vehicle driving system (2) is processed and
aa) in the case that the brake demand (5) of the autonomous vehicle driving system (2) is lower than the brake demand (6) of the driver operated system (4) the brake demand (4) of the driver operated system (4) is processed, and/or
b) control logic is provided which stores system parameters submitted via a databus such that after a failure of the sending unit for sending the system parameters via the databus, a failure of the receiving unit for receiving the system parameters via the databus or a failure of the databus it is possible that the system parameters are restored and operation can be resumed under consideration of the restored system parameters and/or
c) a maximum speed is defined and control logic is provided which limits the maximum speed to the defined maximum speed limit by a brake action and/or
d) control logic is provided which terminates an auxiliary braking mode (19) and/or sets the vehicle out of operation when the vehicle (1) has been brought to a stop and/or
e) control logic is provided which limits the gradient of the deceleration of the vehicle caused by the auxiliary brake system (8) to a threshold and/or
f) control logic is provided which provides a parking brake function after the vehicle (1) has come to a stop and/or
g) control logic is provided which allows a self-test of the brake performance of the auxiliary brake system (8) or of the EBS brake system (7) to apply the brakes, the self-test in particular basing on a comparison of the functionality of the EBS brake system (7) and the auxiliary brake system (8) and/or
h) control logic is provided which allows a drag or yaw control when braking the vehicle (1) via the auxiliary brake system (8) and/or
i) control logic is provided which allows a control of the retardation by the EBS brake system (7) and/or the auxiliary brake system (8) with an additional control of the drivetrain brake torque and/or
j) control logic is provided which coordinates
ja) the generation of a yaw torque generated by brake forces at different wheel ends and
jb) the determination of the steering angle by an autonomous vehicle driving system and/or
k) control logic is provided which prevents tilting by a control of the brake forces and/or
l) control logic is provided which prevents or reduces slip at the wheels during a deceleration of the vehicle by a brake action.

## Patentansprüche

1. Autonom fahrendes Fahrzeug (1) mit
a) einem Bremssystem (3) mit einem EBS-Bremssystem (7) und einem Hilfsbremssystem (8),
b) einem Steuer- oder Regelsystem (2) zum autonomen Fahren mit Steuerlogik zum
ba) Steuern oder Regeln des autonomen Fahrens und
bb) automatischen Herbeiführen einer Bremsaktion des Bremssystems (3),
c) wobei das Bremssystem (3) eine Schalteinrichtung (13) aufweist und/oder Schaltlogik aufweist, die das EBS-Bremssystem (7) deaktiviert und das Hilfsbremssystem (8) aktiviert, wenn eine zumindest verringerte Bremsperformance des EBS-Bremssystems (7) detektiert wird,
d) wobei das EBS-Bremssystem (7) und das Hilfsbremssystem (8) dieselbe Bremsanforderung (5) verarbeiten, die von dem Steuer- oder Regelsystem (2) zum autonomen Fahren erzeugt wird, ohne dass eine Anpassung der Bremsanforderung (5) erfolgt, wenn eine Umschaltung von dem EBS-Bremssystem (7) zu dem Hilfsbremssystem (8) erfolgt,
e) wobei das EBS-Bremssystem und das Hilfsbremssystem mit mindestens einem Bremsaktuator über parallele Bremspfade verbunden sind.

2. Fahrzeug (1) nach Anspruch 1 mit einem Bremssystem (3) mit
a) einem EBS-Bremssystem (7), welches in einem elektropneumatischen EBS-Bremsmodus (18) und einem pneumatischen EBS-Backupmodus (35) betrieben werden kann,
b) einem Hilfsbremssystem (8), welches in einem elektropneumatischen Hilfsbremsmodus (19) betrieben werden kann, und
c) einer Schalteinrichtung (13) oder Schaltlogik und/oder einer analysierenden Einrichtung (24) oder analysierender Logik zum Umschalten des Betriebs des Bremssystems (3) zwischen dem EBS-Bremsmodus (18), dem EBS-Backup-Modus (35) und dem Hilfsbremsmodus (19).

3. Fahrzeug (1) nach Anspruch 1 oder 2, **dadurch gekennzeichnet, dass** das Hilfsbremssystem (8) ein Schwenkankerventil (9) aufweist, welches einen Bremsdruck in mindestens einem Bremsaktuator (12; 38; 39) steuert der regelt.

4. Fahrzeug (1) nach einem der Ansprüche 1 bis 3, **dadurch gekennzeichnet, dass** das Hilfsbremssystem (8) und das EBS-Bremssystem (7) über ein Wechselventil (16) mit mindestens einem Bremsaktuator (12; 38, 39) verbunden sind.

5. Fahrzeug (1) nach einem der Ansprüche 1 bis 4, **dadurch gekennzeichnet, dass**
a) ein erster EBS-Bremssystemteil (89) und ein erster Hilfsbremssystemteil (90) mit mindestens einem Bremsaktuator (38a, 38b) einer ersten Achse (36) verbunden sind und
b) ein zweiter EBS-Bremssystemteil (91) und ein zweiter Hilfsbremssystemteil (92) mit mindestens einem Bremsaktuator (39a, 39b) einer zweiten Achse (37) verbunden sind.

6. Fahrzeug (1)nach Anspruch 5, **dadurch gekennzeichnet, dass**
a) ein erster Behälter (86) Druckluft für den ersten EBS-Bremssystemteil (89) und den zweiten Hilfsbremssystemteil (92) bereitstellt und/oder
b) ein zweiter Behälter (87) Druckluft zu dem zweiten EBS-Bremssystemteil (91) und dem ersten Hilfsbremssystemteil (90) bereitstellt.

7. Fahrzeug (1) nach Anspruch 5 oder 6, **dadurch gekennzeichnet, dass** die Schalteinrichtung (13) und/oder die analysierende Einrichtung (24) Steuerlogik aufweisen/aufweist, die
a) ermittelt, wenn in dem ersten EBS-Bremssystemteil (89) oder in dem zweiten EBS-Bremssystemteil (91) die Bremsperformance zumindest reduziert ist und
b) in dem Fall, dass
ba) lediglich eine zumindest verringerte Bremsperformance des ersten EBS-Bremssystemteils (89) vorliegt, den ersten EBS-Bremssystemteil (89) deaktiviert und den ersten Hilfsbremssystemteil (90) aktiviert, während das zweite EBS-Bremssystemteil (91) aktiviert bleibt und das zweite Hilfsbremssystemteil (92) deaktiviert bleibt und/oder
bb) lediglich eine zumindest reduzierte Bremsperformance des zweiten EBS-Bremssystemteils (91) vorliegt, den zweiten EBS-Bremssystemteil (91) deaktiviert und den zweiten Hilfsbremssystemteil (92) aktiviert, während der erste EBS-Bremssystemteil (89) aktiviert bleibt und der zweite Hilfsbremssystemteil (90) deaktiviert bleibt.

8. Fahrzeug (1) nach Anspruch 5 oder 6, **dadurch gekennzeichnet, dass** die Schalteinrichtung (13) und/oder die analysierende Einrichtung (24) Steuerlogik aufweisen/aufweist, die
a) ermittelt, ob eine zumindest verringerte Bremsperformance in dem ersten EBS-Bremssystemteil (89) oder in dem zweiten EBS-Bremssystemteil (91) vorliegt und
b) in dem Fall, dass eine zumindest verringerte Bremsperformance eines EBS-Bremssystemteils (89, 91) vorliegt, das Bremssystem (3) von dem ABS-Bremsmodus (18) in den Hilfsbremsmodus (19), in dem der erste EBS-Bremssystemteil (89) und der zweiten EBS-Bremssystemteil (91) deaktiviert sind und der erste Hilfsbremssystemteil (90) und der zweite Hilfsbremssystemteil (92) aktiviert sind, umschaltet.

9. Fahrzeug (1) nach einem der Ansprüche 1 bis 8, **dadurch gekennzeichnet, dass** das EBS-Bremssystem (7) einen pneumatischen EBS-Backupmodus (35) aufweist, wobei der pneumatische EBS-Backupmodus (35) aktiviert wird oder ist, wenn
a) sowohl eine Bremsanforderung (6) des Fahrers vorliegt
b) als auch das EBS-Bremssystem (7) eine zumindest verringerte Performance hat.

10. Fahrzeug (1) nach einem der Ansprüche 1 bis 9, **dadurch gekennzeichnet, dass** eine Statusermittlungseinrichtung (26) oder eine einen Status ermittelnde Logik vorhanden ist, welche ermittelt und/oder signalisiert, wenn das Hilfsbremssystem aktiviert ist oder aktiviert werden wird und/oder welche den Status des Hilfsbremssystems (8) ermittelt und/oder welche den Status an mindestens eine andere Komponente sendet.

11. Fahrzeug (1) nach einem der Ansprüche 1 bis 10, **dadurch gekennzeichnet, dass** die Schalteinrichtung (13) ein Teil der EBS-Steuereinheit (48) ist, die das Hilfsbremssystem (8) in einem oder einen Hilfsbremsmodus (19) aktiviert.

12. Fahrzeug (1) nach einem der Ansprüche 1 bis 11, **dadurch gekennzeichnet, dass** das Bremssystem (3) die folgenden Betriebsmoden aufweist:
a) einen EBS-Bremsmodus (18), in dem das EBS-Bremssystem (7) aktiviert wird oder ist und das Hilfsbremssystem (8) deaktiviert ist oder wird, wobei der EBS-Bremsmodus (18) aktiviert wird oder aufrechterhalten wird, wenn die Steuerlogik detektiert, dass das EBS-Bremssystem (7) ordnungsgemäß arbeitet, wobei der EBS-Bremsmodus (18) verwendet wird zur Verarbeitung einer Bremsanforderung (6) des Fahrers und einer Bremsanforderung (5) des Steuer- oder Regelsystems (7) für das autonome Fahren und/oder
b) einen Hilfsbremsmodus (19), in dem das EBS-Bremssystem (7) deaktiviert ist oder wird und das Hilfsbremssystem (8) aktiviert wird oder ist, wobei der Hilfsbremsmodus (19) aktiviert wird
ba) wenn die Steuerlogik detektiert, dass die Bremsperformance des EBS-Bremssystems (7) geringer ist als die Bremsperformance des Hilfsbremssystems (8) und/oder
bb) wenn die Steuerlogik detektiert, dass das EBS-Bremssystem (7) nicht ordnungsgemäß arbeitet,
wobei der Hilfsbremsmodus (19) verwendet wird zur Verarbeitung einer Bremsanforderung (6) eines Fahrers und einer Bremsanforderung (5) des Steuer- oder Regelsystems (2) für das autonome Fahren und/oder
c) einen pneumatischen EBS-Backupmodus (35), in dem das EBS-Bremssystem (7) durch den Fahrer ohne elektronische Unterstützung gesteuert oder geregelt wird und das Hilfsbremssystem (8) deaktiviert ist.

13. Fahrzeug (1) nach einem der Ansprüche 1 bis 12, **dadurch gekennzeichnet, dass**
a) einem Fahrzeugrad ein erster Radgeschwindigkeitssensor (84a) und ein zweiter Radgeschwindigkeitssensor (84b) zugeordnet sind und
b) ein Radgeschwindigkeitssignal des ersten Radgeschwindigkeitssensors (84a) von dem EBS-Bremssystem (7) verarbeitet wird und ein Radgeschwindigkeitssignal des zweiten Radgeschwindigkeitssensors (84b) von dem Hilfsbremssystem (8) verarbeitet wird.

14. Fahrzeug (1) nach einem der Ansprüche 1 bis 13, **dadurch gekennzeichnet, dass**
a) einer Bremspedaleinheit (45) ein erster Bremspedalsensor (46a) und ein zweiter Bremspedalsensor (46b) zugeordnet sind und
b) ein Bremspedalsignal des ersten Bremspedalsensors (46a) von dem EBS-Bremssystem (7) verarbeitet wird und ein Bremspedalsignal des zweiten Bremspedalsensors (46b) von dem Hilfsbremssystem (8) verarbeitet wird.

15. Fahrzeug (1) nach einem der Ansprüche 1 bis 14, **dadurch gekennzeichnet, dass** das Bremssystem (3) ein Interface (93) aufweist, wobei das Interface (93) mit der analysierenden Einrichtung (24) verbunden ist und die analysierende Einrichtung (24) Steuerlogik aufweist
a) zum Verarbeiten einer Übernahme-Anfrage (23), die von dem Bremssystem (3) über das Interface (93) zu der analysierenden Einrichtung (24) gesendet wird oder ist, und zum Ermitteln, ob die Übernahme-Anfrage (23) bestätigt werden kann oder nicht, und
b) zum Senden einer Übernahme-Bestätigung (25) an das Bremssystem (3), welche dann die Deaktivierung des EBS-Bremssystems (7) und die Aktivierung des Hilfsbremssystems (8) auslöst.

16. Fahrzeug (1) nach einem der Ansprüche 1 bis 15, **dadurch gekennzeichnet, dass** die Schalteinrichtung (13) zum Umschalten von dem EBS-Bremsmodus (18) in den Hilfsbremsmodus (19) und/oder die analysierende Einrichtung (24) zum Bestätigen der Übernahme-Anfrage (23)
a) den Fahrzustand des Fahrzeugs und/oder
b) Umgebungsparameter und/oder
c) Eingaben des Fahrers und/oder
d) eine Bremsperformance des EBS-Bremssystems (7) und/oder
e) eine Bremsperformance des Hilfsbremssystems (8)
berücksichtigt/berücksichtigen.

17. Fahrzeug (1) nach einem der Ansprüche 1 bis 16, **dadurch gekennzeichnet, dass** ein vom Fahrer betriebenes System (4) zur Herbeiführung einer Bremsaktion infolge einer Bremsanforderung (6), die von dem Fahrer gegeben wird, vorhanden ist.

18. Fahrzeug (1) nach einem der Ansprüche 1 bis 17, **dadurch gekennzeichnet, dass** das EBS-Bremssystem (7) oder der EBS-Bremssystemteil (89; 91) und das Hilfsbremssystem (8) oder der Hilfsbremssystemteil (90; 92)
a) separate elektrische Leistungsquellen zur Bereitstellung elektrischer Energie und/oder
b) separate Behälter (86, 87) zur Versorgung mit Druckluft
aufweisen.

19. Fahrzeug (1) nach einem der Ansprüche 1 bis 18, **dadurch gekennzeichnet, dass**
a) Steuerlogik vorhanden ist, welche eine Priorität der Bremsanforderung (5) eines Fahrsystems (2) eines autonomen Fahrzeugs gegenüber der Bremsanforderung (5) des vom Fahrer betriebenen Systems (2) derart priorisiert, dass
aa) in dem Fall, dass die Bremsanforderung (5) des Fahrsystems (2) des autonomen Fahrzeugs größer ist als die Bremsanforderung (6) des vom Fahrer betriebenen Systems (4) die Bremsanforderung (5) des Fahrsystems (2) des autonomen Fahrzeugs verarbeitet wird und
aa) in dem Fall, dass die Bremsanforderung (5) des Fahrsystems (2) des autonomen Fahrzeugs kleiner ist als die Bremsanforderung (6) des vom Fahrer betriebenen Systems (4) die Bremsanforderung (4) des vom Fahrer betriebenen Systems (4) verarbeitet wird, und/oder
b) Steuerlogik vorhanden ist, welche Systemparameter, die über einen Datenbus gesendet werden, derart speichert, dass nach einem Versagen der Sendeeinheit zum Senden der Systemparameter über den Datenbus, nach einem Versagen der Empfangseinheit zum Empfangen der Systemparameter über den Datenbus oder nach einem Versagen des Datenbusses möglich ist, dass die Systemparameter zurückgeladen werden und ein Betrieb wieder aufgenommen werden kann unter Berücksichtigung der zurückgeladenen Systemparameter und/oder
c) eine maximale Geschwindigkeit definiert wird oder ist und Steuerlogik vorhanden ist, welche durch eine Bremsbetätigung die maximale Geschwindigkeit auf die definierte Maximalgeschwindigkeitsgrenze reduziert oder begrenzt und/oder
d) Steuerlogik vorhanden ist, welche einen Hilfsbremsmodus (19) beendet und/oder das Fahrzeug außer Betrieb setzt, wenn das Fahrzeug (1) zum Stillstand gebracht ist, und/oder
e) Steuerlogik vorhanden ist, welche den Gradienten der Verzögerung des Fahrzeugs, die durch das Hilfsbremssystem (8) herbeigeführt wird, auf einen Schwellwert begrenzt und/oder
f) Steuerlogik vorhanden ist, welche eine Parkbremsfunktion bereitstellt, nachdem das Fahrzeug (1) zum Stillstand gebracht worden ist, und/oder
g) Steuerlogik vorhanden ist, welche einen Selbsttest der Bremsperformance des Hilfsbremssystems (8) oder des EBS-Bremssystems (7) mit einer Betätigung der Bremsen ermöglicht, wobei der Selbsttest insbesondere auf einem Vergleich der Funktionalität des EBS-Bremssystems (7) und des Hilfsbremssystems (8) basiert, und/oder
h) Steuerlogik vorhanden ist, welche eine Widerstands- oder Gier-Steuerung oder -Regelung ermöglicht, wenn das Fahrzeug (1) mittels des Hilfsbremssystems (8) gebremst wird, und/oder
i) Steuerlogik vorhanden ist, welche eine Steuerung oder Regelung der Verzögerung durch das EBS-Bremssystem (7) und/oder durch das Hilfsbremssystem (8) steuert oder regelt mit einer zusätzlichen Steuerung oder Regelung des Bremsmoments des Antriebsstrangs, und/oder
j) Steuerlogik vorhanden ist, welche
ja) die Erzeugung eines Giermoments, welches durch Bremskräfte an unterschiedlichen Radenden erzeugt wird, und
jb) die Ermittlung eines Lenkwinkels durch ein Fahrsystem des autonomen Fahrzeugs koordiniert, und/oder
k) Steuerlogik vorhanden ist, welche durch eine Steuerung oder Regelung der Bremskräfte ein Kippen oder Überschlagen vermeidet, und/oder
l) Steuerlogik vorhanden ist, welche während einer Verzögerung des Fahrzeugs mittels einer Bremsaktion Schlupf an den Rädern verhindert oder reduziert.

## Revendications

1. Véhicule à entraînement autonome (1) comprenant
a) un système de freinage (3) avec un système de freinage EBS (7) et un système de freinage auxiliaire (8),
b) un système de commande d'entraînement autonome (2) avec une logique de commande destiné à
ba) contrôler l'entraînement autonome et
bb) induire automatiquement une action de freinage du système de freinage (3),
c) le système de freinage (3) comprenant un dispositif de commutation (13) et/ou une logique de commutation qui désactive le système de freinage EBS (7) et active le système de freinage auxiliaire (8) lors de la détection d'au moins une performance de freinage réduite du système de freinage EBS (7),
d) le système de freinage EBS (7) et le système de freinage auxiliaire (8) traitant la même demande de freinage (5) générée par le système de commande d'entraînement autonome (2) sans adaptation de la demande de freinage (5) lors du passage du système de freinage EBS (7) au système de freinage auxiliaire (8),
e) le système de freinage EBS et le système de freinage auxiliaire étant reliés à au moins un actionneur de frein via des trajets de freinage parallèles.

2. Véhicule (1) selon la revendication 1, comprenant un système de freinage (3) avec
a) un système de freinage EBS (7) qui peut être actionné dans un mode de freinage EBS électropneumatique (18) et un mode de secours de freinage EBS pneumatique (35),
b) un système de freinage auxiliaire (8) qui peut être actionné dans un mode de freinage auxiliaire électropneumatique (19), et
c) un dispositif de commutation (13) ou une logique de commutation et/ou un dispositif d'analyse (24) ou une logique d'analyse destiné(e) à déclencher le système de freinage (3) entre le mode de freinage EBS (18), le mode de secours EBS (35) et le mode de freinage auxiliaire (19).

3. Véhicule (1) selon la revendication 1 ou 2, **caractérisé en ce que** le système de freinage auxiliaire (8) comprend une vanne d'ancrage pivotante (9) qui contrôle une pression de freinage dans au moins un actionneur de frein (12 ; 38, 39).

4. Véhicule (1) selon l'une des revendications 1 à 3, **caractérisé en ce que** le système de freinage auxiliaire (8) et le système de freinage EBS (7) sont reliés à au moins un actionneur de frein (12 ; 38, 39) via une vanne à deux voies (16).

5. Véhicule (1) selon l'une des revendications 1 à 4, **caractérisé en ce que**
a) une première partie de système de freinage EBS (89) et une première partie de système de freinage auxiliaire (90) sont reliées à au moins un actionneur de frein (38a, 38b) d'un premier essieu (36) et
b) une seconde partie de système de freinage EBS (91) et une seconde partie de système de freinage auxiliaire (92) sont reliées à au moins un actionneur de frein (39a, 39b) d'un second essieu (37).

6. Véhicule (1) selon la revendication 5, **caractérisé en ce que**
a) un premier réservoir (86) fournit de l'air comprimé à la première partie de système de freinage EBS (89) et à la seconde partie de système de freinage auxiliaire (92), et/ou
b) un second réservoir (87) fournit de l'air comprimé à la seconde partie de système de freinage EBS (91) et à la première partie de système de freinage auxiliaire (90).

7. Véhicule (1) selon la revendication 5 ou 6, **caractérisé en ce que** le dispositif de commutation (13) et/ou le dispositif d'analyse (24) comprend une logique de commande qui
a) détermine si il existe au moins une performance de freinage réduite dans le première partie de système de freinage EBS (89) ou dans la seconde partie de système de freinage EBS (91) et
b) lorsque
ba) il n'existe qu'au moins une performance de freinage réduite de la première partie de système de freinage EBS (89), désactive la première partie de système de freinage EBS (89) et active la première partie de système de freinage auxiliaire (90), tandis que la seconde partie de système de freinage EBS (91) reste activée et la seconde partie de système de freinage auxiliaire (92) reste désactivée, et/ou
bb) il n'existe qu'au moins une performance de freinage réduite de la seconde partie de système de freinage EBS (91), désactive la seconde partie de système de freinage EBS (91) et active la seconde partie de système de freinage auxiliaire (92), tandis que la première partie de système de freinage EBS (89) reste activée et la première partie de système de freinage auxiliaire (90) reste désactivée.

8. Véhicule (1) selon la revendication 5 ou 6, **caractérisé en ce que** le dispositif de commutation (13) et/ou le dispositif d'analyse (24) comprend une logique de commande qui
a) détermine si il existe au moins une performance de freinage réduite dans la première partie de système de freinage EBS (89) ou dans la seconde partie de système de freinage EBS (91), et
b) si il existe au moins une performance de freinage réduite de l'une des parties de système de freinage EBS (89, 91), fait passer le système de freinage (3) du mode de freinage ABS (18) au mode de freinage auxiliaire (19), dans lequel la première partie de système de freinage EBS (89) et la seconde partie de système de freinage EBS (91) sont désactivées et la première partie de système de freinage auxiliaire (90) et la seconde partie de système de freinage auxiliaire (92) sont activées.

9. Véhicule (1) selon l'une des revendications 1 à 8, **caractérisé en ce que** le système de freinage EBS (7) comprend un mode de secours EBS pneumatique (35), le mode de secours EBS pneumatique (35) étant activé si
a) une demande de freinage (6) du conducteur est présente et
b) le système de freinage EBS (7) présente une performance au moins réduite.

10. Véhicule (1) selon l'une des revendications 1 à 9, **caractérisé en ce qu'**un dispositif de détermination de statut (26) ou une logique de détermination de statut est prévu(e) et détermine et/ou signale si le système de freinage auxiliaire est ou sera activé et/ou détermine le statut du système de freinage auxiliaire (8) et/ou envoie le statut à au moins un autre composant.

11. Véhicule (1) selon l'une des revendications 1 à 10, **caractérisé en ce que** le dispositif de commutation (13) est une partie d'une unité de commande EBS (48) qui active le système de freinage auxiliaire (8) dans un mode de freinage auxiliaire (19).

12. Véhicule (1) selon l'une des revendications 1 à 11, **caractérisé en ce que** le système de freinage (3) comprend les modes de fonctionnement suivants :
a) un mode de freinage EBS (18) dans lequel le système de freinage EBS (7) est activé et le système de freinage auxiliaire (8) est désactivé, le mode de freinage EBS (18) étant activé ou maintenu si la logique de commande détecte que le système de freinage EBS (7) fonctionne normalement, le mode de freinage EBS (18) étant utilisé pour traiter une demande de freinage (6) d'un conducteur et une demande de freinage (5) du système de commande d'entraînement autonome (2), et/ou
b) un mode de freinage auxiliaire (19) dans lequel le système de freinage EBS (7) est désactivé et le système de freinage auxiliaire (8) est activé, le mode de freinage auxiliaire (19) étant activé
ba) si la logique de commande détecte que les performances de freinage du système de freinage EBS (7) sont inférieures aux performances de freinage du système de freinage auxiliaire (8), et/ou
bb) si la logique de commande détecte que le système de freinage EBS (7) ne fonctionne pas normalement, le mode de freinage auxiliaire (19) étant utilisé pour traiter une demande de freinage (6) d'un conducteur et une demande de freinage (5) du système de commande d'entraînement autonome (2), et/ou
c) un mode de secours EBS pneumatique (35) dans lequel le système de freinage EBS (7) est contrôlé par le conducteur sans assistance électronique et le système de freinage auxiliaire (8) est désactivé.

13. Véhicule (1) selon l'une des revendications 1 à 12, **caractérisé en ce que**
a) un premier capteur de vitesse de roue (84a) et un second capteur de vitesse de roue (84b) sont associés à une roue de véhicule, et
b) un signal de vitesse de roue qui provient du premier capteur de vitesse de roue (84a) est traité par le système de freinage EBS (7) et un signal de vitesse de roue qui provient du second capteur de vitesse de roue (84b est traité par le système de freinage auxiliaire (8).

14. Véhicule (1) selon l'une des revendications 1 à 13, **caractérisé en ce que**
a) un premier capteur de pédale de frein (46a) et un second capteur de pédale de frein (46b) sont associés à une unité de pédale de frein (45), et
b) un signal de pédale de frein qui provient du premier capteur de pédale de frein (46a) est traité par le système de freinage EBS (7) et un signal de pédale de frein qui provient du second capteur de pédale de frein (46b) est traité par le système de freinage auxiliaire (8).

15. Véhicule (1) selon l'une des revendications 1 à 14, **caractérisé en ce que** le système de freinage (3) comprend une interface (93), l'interface (93) étant reliée à un dispositif d'analyse (24) et le dispositif d'analyse (24) comprenant une logique de commande destinée à
a) traiter une demande de prise de contrôle (23) soumise par le système de freinage (3) via l'interface (93) au dispositif d'analyse (24) et déterminer si la demande de prise de contrôle (23) peut être confirmée ou non, et
b) envoyer une confirmation de prise de contrôle (25) au système de freinage (3) qui déclenche ensuite la désactivation du système de freinage EBS (7) et l'activation du système de freinage auxiliaire (8).

16. Véhicule (1) selon l'une des revendications 1 à 15, **caractérisé en ce que**, pour passer du mode de freinage EBS (18) au mode de freinage auxiliaire (19), le dispositif de commutation (13), et/ou pour confirmer la demande de prise de contrôle (23), le dispositif d'analyse (24) prend/prennent en considération
a) les conditions de conduite du véhicule, et/ou
b) les paramètres environnementaux, et/ou
c) les actions du conducteur, et/ou
d) les performances de freinage du système de freinage EBS (7), et/ou
e) les performances de freinage du système de freinage auxiliaire (8).

17. Véhicule (1) selon l'une des revendications 1 à 16, **caractérisé en ce qu'**un système déclenché par un conducteur (4) est prévu afin de provoquer une action de freinage en cas de demande de freinage (6) du conducteur.

18. Véhicule (1) selon l'une des revendications 1 à 17, **caractérisé en ce que** le système de freinage EBS (7) ou la partie de système de freinage EBS (89 ; 91) et le système de freinage auxiliaire (8) ou la partie de système de freinage auxiliaire (90 ; 92) possèdent
a) des sources d'alimentation électrique distinctes destinées à fournir de l'électricité, et/ou
b) des réservoirs distincts (86, 87) destinés à fournir de l'air comprimé.

19. Véhicule (1) selon l'une des revendications 1 à 18, **caractérisé en ce que**
a) une logique de commande est prévue et garantit une priorité de la demande de freinage (5) d'un système d'entraînement de véhicule autonome (2) sur la demande de freinage (5) du système déclenché par le conducteur (2) de sorte que
aa) si la demande de freinage (5) du système d'entraînement de véhicule autonome (2) est supérieure à la demande de freinage (6) du système déclenché par le conducteur (4), la demande de freinage (5) du système d'entraînement de véhicule autonome (2) soit traitée, et
aa) si la demande de freinage (5) du système d'entraînement de véhicule autonome (2) est inférieure à la demande de freinage (6) du système déclenché par le conducteur (4), la demande de freinage (4) du système déclenché par le conducteur (4) soit traitée, et/ou
b) une logique de commande est prévue et stocke les paramètres du système soumis via un bus de données, de sorte que, après un échec de l'unité d'envoi à envoyer les paramètres du système via le bus de données, un échec de l'unité de réception à recevoir les paramètres du système via le bus de données ou une défaillance du bus de données, il soit possible que les paramètres du système soient rétablis et que le fonctionnement puisse reprendre en tenant compte des paramètres du système rétablis, et/ou
c) une vitesse maximale est définie et une logique de commande est prévue et limite la vitesse maximale à la limite de vitesse maximale définie par une action de freinage, et/ou
d) une logique de commande est prévue et met fin à un mode de freinage auxiliaire (19) et/ou met le véhicule hors service lorsque le véhicule (1) a été arrêté, et/ou
e) une logique de commande est prévue et limite le gradient de la décélération du véhicule provoquée par le système de freinage auxiliaire (8) à un seuil, et/ou
f) une logique de commande est prévue et offre une fonction de frein de stationnement une fois que le véhicule (1) a été arrêté, et/ou
g) une logique de commande est prévue et permet un autotest des performances de freinage du système de freinage auxiliaire (8) ou du système de freinage EBS (7)a fin d'appliquer les freins, l'autotest reposant en particulier sur une comparaison de la fonctionnalité du système de freinage EBS (7) et du système de freinage auxiliaire (8), et/ou
h) une logique de commande est prévue et permet un contrôle de couple d'inertie ou de lacet lors du freinage du véhicule (1) via le système de freinage auxiliaire (8), et/ou
i) une logique de commande est prévue et permet un contrôle du retard par le système de freinage EBS (7) et/ou le système de freinage auxiliaire (8) avec un contrôle supplémentaire du couple de freinage du train de transmission, et/ou
j) une logique de commande est prévue et coordonne
ja) la génération d'un couple de lacet généré par les forces de freinage à différentes extrémités de roues, et
jb) la détermination de l'angle de braquage par un système d'entraînement de véhicule autonome, et/ou
k) une logique de commande est prévue et empêche tout retournement par un contrôle des forces de freinage, et/ou
l) une logique de commande est prévue et empêche ou réduit le patinage au niveau des roues pendant une décélération du véhicule par une action de freinage.
